# EUROPÄISCHE PATENTSCHRIFT

(11) **EP 3 718 504 B1**
(45) Veröffentlichungstag und Bekanntmachung des Hinweises auf die Patenterteilung: **26.01.2022**
(21) Anmeldenummer: 19167623.8
(22) Anmeldetag: 05.04.2019
(51) Int. Cl.: A61C 17/32, A61C 17/34

(54) **ELEKTRISCHES BÜRSTENHANDTEIL UND EINE ELEKTRISCHE ZAHNBÜRSTE MIT DEM ELEKTRISCHEN BÜRSTENHANDTEIL UND EINER AUFSTECKBÜRSTE**
ELECTRICAL BRUSH HANDPIECE AND ELECTRIC TOOTHBRUSH USING THE ELECTRIC BRUSH HANDPIECE AND ATTACHABLE HEAD
MANCHE DE BROSSE ÉLECTRIQUE ET BROSSE À DENTS ÉLECTRIQUE DOTÉE DE LA MANCHE DE BROSSE ÉLECTRIQUE ET BROSSE ENFICHABLE

(43) Veröffentlichungstag der Anmeldung: 07.10.2020
(73) Patentinhaber: Trisa Holding AG, 6234 Triengen (CH)
(72) Erfinder: INGOLD, Andreas, 6234 Triengen (CH)
(74) Vertreter: Daub, Thomas

(56) Entgegenhaltungen:
- EP-A1- 2 246 009
- EP-A2- 1 467 472
- CN-A- 103 762 817
- CN-U- 203 656 045

## Beschreibung

### Stand der Technik

Die Erfindung betrifft ein elektrisches Bürstenhandteil und eine elektrische Zahnbürste mit dem elektrischen Bürstenhandteil und einer Aufsteckbürste.

Es sind bereits elektrische Bürstenhandteile und elektrische Zahnbürsten vorgeschlagen worden, wie beispielsweise in der CN 103490581 B, der CN 103762817 B, der CN 205911933 U und der EP 1 467 472 A2.

Insbesondere sind bereits elektrische Bürstenhandteile mit zumindest einer Schnittstelle zu einer Kopplung mit einer Aufsteckbürste mit zumindest einer Rahmeneinheit und mit zumindest einer in der Rahmeneinheit aufgenommenen Antriebseinheit zu einem Antrieb der Schnittstelle, die zumindest einen Rotor und zumindest ein Rückstellelement aufweist, welche mit einem ersten Ende drehfest mit dem Rotor gekoppelt ist und mit einem zweiten Ende drehfest an der Rahmeneinheit fixiert ist, vorgeschlagen worden.

Die Aufgabe der Erfindung besteht insbesondere darin, eine gattungsgemäße Vorrichtung mit verbesserten Eigenschaften hinsichtlich Platzbedarfs und/oder eines Rückstellverhaltens bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Eine weitere Aufgabe der Erfindung ist es, ein System für die Abdichtung zwischen einer Rahmeneinheit und einem Gehäuse eines elektrischen Kleingeräts insbesondere einer elektrischen Zahnbürste oder einer Gesichtsbürste bereitzustellen.

Eine weitere Aufgabe der Erfindung besteht darin, den Motor optimiert anzusteuern, beispielsweise mit einem sinusförmigen Signal.

Eine andere Aufgabe der Erfindung ist es, einen Motor mit Rahmeneinheit zu schaffen, der vom Aufbau her optimiert ist.

Eine weitere Aufgabe der Erfindung ist es, Bürstenköpfe bereitzustellen, die mit dem genannten Motoraufbau optimal funktionieren.

### Vorteile der Erfindung

Die Erfindung ist wie in den Ansprüchen definiert.

Die Erfindung geht aus von einem elektrischen Bürstenhandteil mit zumindest einer Schnittstelle zu einer Kopplung mit einer Aufsteckbürste, mit zumindest einer Rahmeneinheit und mit zumindest einer in der Rahmeneinheit aufgenommenen Antriebseinheit zu einem Antrieb der Schnittstelle, die zumindest einen Rotor und zumindest ein Rückstellelement aufweist, welche mit einem ersten Ende drehfest mit dem Rotor gekoppelt ist und mit einem zweiten Ende drehfest an der Rahmeneinheit fixiert ist. Es wird vorgeschlagen, dass das zumindest eine Rückstellelement plattenförmig ausgebildet ist. Vorzugsweise ist das zumindest eine Rückstellelement aus einem plattenförmigen Rohling, wie insbesondere einem Blech, hergestellt. Vorzugsweise erstreckt sich die Rahmeneinheit axial über die gesamte Antriebseinheit. Bevorzugt ist die Antriebseinheit insbesondere von einem Motor gebildet. Insbesondere umfasst die Antriebseinheit einen Elektromotor. Vorzugsweise weist das elektrische Bürstenhandteil zudem einen Energiespeicher und/oder eine Ladespule auf. Der Energiespeicher und/oder die Ladespule sind vorzugsweise in der Rahmeneinheit aufgenommen. Ferner ist der Energiespeicher insbesondere von einem Akkumulator gebildet. Grundsätzlich wäre jedoch auch eine andere, einem Fachmann als sinnvoll erscheinende Ausgestaltung des Energiespeichers denkbar, wie beispielsweise als Batterie. Vorzugsweise ist die Rahmeneinheit insbesondere sowohl zu einer Aufnahme einer einzelnen Energiespeicherzelle, wie insbesondere einer AA-Energiespeicherzelle, als auch zu einer Aufnahme von drei Energiespeicherzellen gleichzeitig, insbesondere von drei AAA-Energiespeicherzellen, vorgesehen. Bevorzugt ist für drei Energiespeicherzellen ein Rahmen vorgesehen, welcher die drei Energiespeicherzellen aufnimmt und in einen Aufnahmebereich der Rahmeneinheit für die einzelne Energiespeicherzelle passt. Bevorzugt ist die Rahmeneinheit mit der Antriebseinheit in einem Gehäuse aufgenommen. Die Rahmeneinheit ist insbesondere in ein Gehäuse des elektrischen Bürstenhandteils eingeschoben ausgebildet.

Das elektrische Bürstenhandteil ist insbesondere von einem elektrischen Körperpflegegerät gebildet. Bevorzugt ist das elektrische Bürstenhandteil von einem elektrischen Zahnbürstenhandteil gebildet. Dabei sind insbesondere verschiedene Bewegungsformen für eine Aufsteckbürste denkbar, wie beispielsweise oszillierend, schwenkend, translatorisch, vibrierend und/oder Kombinationen oder Überlagerungen davon. Die Oszillation des bewegten Teils der Aufsteckbürste kann im Wesentlichen parallel oder senkrecht zur Längsrichtung der Achse/Rotationsachse passieren. Es sind jedoch auch andere, insbesondere kosmetische, Anwendungen für das elektrische Bürstenhandteil denkbar, wie beispielsweise Mascara, Nagellackpinsel, Gesichtsbürsten, Applikatoren, Massagegeräte, Make-up-Pinsel und/oder Make-up-Schwämme.

Bevorzugt ist der Rotor insbesondere zu einer Durchführung einer oszillierenden Bewegung vorgesehen. Besonders bevorzugt ist der Rotor insbesondere mit der Schnittstelle, vorzugsweise mit einer Achse der Schnittstelle gekoppelt, welche zu einer Übertragung einer Antriebsbewegung auf eine Aufsteckbürste vorgesehen ist.

Unter einer "Schnittstelle" soll in diesem Zusammenhang insbesondere ein Bereich des elektrischen Bürstenhandteils verstanden werden, der zu einer verliersicheren Kopplung mit einer Schnittstellenaufnahme einer Aufsteckbürste vorgesehen ist. Vorzugsweise umfasst die Schnittstelle eine aus einem Gehäuse des Bürstenhandteils hervorstehende Achse. Vorzugsweise ist die Schnittstellenaufnahme insbesondere zu einer kraft- und/oder formschlüssigen Aufnahme der Schnittstelle vorgesehen. Die Schnittstellenaufnahme bildet insbesondere einen Aufnahmebereich aus, in welchen die Schnittstelle des Bürstenhandteils eingeschoben werden kann, wobei die Schnittstelle insbesondere ab einer definierten Einschubkraft in dem Aufnahmebereich verrastet und/oder verklemmt. Vorzugsweise ist die Schnittstellenaufnahme auf einer dem Bürstenkopf abgewandten Seite der Aufsteckbürste angeordnet.

Unter einem "Gehäuse" soll in diesem Zusammenhang insbesondere eine schützende Außenhülle des Bürstenhandteils verstanden werden. Vorzugsweise umgibt das Gehäuse einen wesentlichen Teil des Bürstenhandteils. Bevorzugt weist das Gehäuse zudem einen Griffbereich auf. Vorzugsweise bildet das Gehäuse einen Griff des Bürstenhandteils aus. Das Gehäuse ist vorzugsweise von einem Kunststoffgehäuse gebildet. Grundsätzlich wäre jedoch auch ein anderes, einem Fachmann als sinnvoll erscheinendes Material denkbar. Ferner kann das Gehäuse sowohl einstückig, als auch insbesondere zweischalig, also aus zwei Schalen bestehend, ausgeführt sein. Vorzugsweise weist das Gehäuse zumindest aus einer Hartkomponente bestehende Bauteile, welche eine strukturtragende Funktion aufweisen, auf. Besonders bevorzugt besteht das Gehäuse insbesondere aus Hartkomponenten und Weichkomponenten, wobei mittels der Weichkomponenten insbesondere Griffflächen zum Halten und Schaltflächen, insbesondere zur Betätigung von Schaltern, ausgebildet sind. Vorzugsweise bilden die Weichkomponenten eine Umspritzung der Hartkomponenten und/oder füllen Ausnehmungen im Randbereich des Gehäuses aus. Ferner soll in diesem Zusammenhang unter einer "festen Rahmeneinheit" insbesondere eine eine Stützstruktur ausbildende Einheit verstanden werden, die einstückig ausgeführt ist und/oder zumindest lediglich aus fest miteinander verbundenen Teilen besteht. Die feste Rahmeneinheit ist insbesondere von mehreren voneinander getrennten Einzelrahmen verschieden. Vorzugsweise bildet die Rahmeneinheit mehrere Aufnahmebereiche aus, insbesondere zumindest für die Antriebseinheit und den Energiespeicher, welche, insbesondere sowohl in einem montierten Zustand, als auch in einem unmontierten Zustand der Rahmeneinheit, definiert relativ zueinander positioniert sind. Die feste Rahmeneinheit ist insbesondere zu einer Ausbildung eines vorgefertigten Moduls vorgesehen, welches an einem Stück in das Gehäuse eingebaut/eingebracht werden kann.

Unter einem "Rückstellelement" soll in diesem Zusammenhang insbesondere ein Element, vorzugsweise ein Federelement, wie beispielsweise eine Biegefeder oder eine Torsionsfeder, verstanden werden, welches dazu vorgesehen ist, den Rotor nach einer Verdrehung in eine definierte Ausgangslage zurück zu bewegen und dadurch ein schwingungsfähiges System zu bilden. Vorzugsweise ist das Element zudem zu einer Dämpfung der oszillierenden Bewegung des Rotors beim Wechsel der Bewegungsrichtung vorgesehen. Insbesondere ist das Rückstellelement dazu vorgesehen, den Rotor jeweils nach einem Abschalten der Antriebseinheit in eine Ausgangslage zurück zu bewegen. Das Rückstellelement ist insbesondere federelastisch ausgebildet. Insbesondere besteht das Rückstellelement aus einem Federstahl. Besonders bevorzugt ist das Rückstellelement von einer Blattfeder gebildet. Unter "plattenförmig" soll in diesem Zusammenhang insbesondere verstanden werden, dass das Rückstellelement eine Dicke, insbesondere eine Dickenerstreckung, aufweist, die wesentlich geringer, insbesondere zumindest um ein 3-faches, insbesondere um ein 5-faches, bevorzugt um ein 10-faches und besonders bevorzugt um ein 15-faches geringer ist als eine Breite, insbesondere eine Querstreckung, und/oder eine Länge, insbesondere Längserstreckung, des Rückstellelements. Bevorzugt soll darunter insbesondere verstanden werden, dass ein kleinster gedachter Quader, welcher die Baueinheit gerade noch vollständig umschließt, eine kürzeste Seitenkante aufweist, deren Länge wesentlich geringer, insbesondere zumindest um ein 3-faches, insbesondere um ein 5-faches, bevorzugt um ein 10-faches und besonders bevorzugt um ein 15-faches geringer ist als die Länge jeder dazu quer verlaufenden Seitenkante des gedachten Quaders. Vorzugsweise beträgt die Länge der kürzesten Seitenkante des Quaders maximal 2 mm, vorzugsweise maximal 1 mm und besonders bevorzugt maximal 0,5 mm. Bevorzugt beträgt die Materialdicke des Rückstellelements von 0,2 mm bis 1 mm, vorzugsweise von 0,3 mm bis 0,7 mm. Vorzugsweise ist die Materialdicke des Rückstellelements über die gesamte Länge konstant. Grundsätzlich wäre jedoch auch denkbar, dass das Rückstellelement ein Dickenprofil aufweist. Insbesondere kann die Federkonstante des Rückstellelements über die Materialdicke und die jeweilige Breite z.B. am Schaft eingestellt werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung des elektrischen Bürstenhandteils kann insbesondere eine selbstständige und zuverlässige Rückstellung des Rotors erreicht werden. Es kann insbesondere erreicht werden, dass die Achse der Schnittstelle nach einer Deaktivierung des elektrischen Bürstenhandteils jeweils immer im Wesentlichen in derselben Stellung stehen bleibt bzw. sich immer in dieselbe Stellung zurückbewegt. Hierdurch kann eine einfache, immergleiche Montage der Aufsteckbürste im deaktivierten Zustand erreicht werden, wodurch ein hoher Komfort erreicht werden kann. Es kann ferner ein vorteilhaft kompaktes und leicht zu montierendes Rückstellelement bereitgestellt werden. Es kann insbesondere ein vorteilhaft geringer Platzbedarf des Rückstellelements erreicht werden. Es kann insbesondere eine vorteilhafte Performance des gesamten Bürstenhandteils erreicht werden. Ferner kann insbesondere eine symmetrische Feder bereitgestellt werden, welche sehr geringe Fertigungstoleranzen aufweist und dadurch eine konstante Performance garantiert. Die symmetrische Form erlaubt eine einfache Ausrichtung bei der Montage.

Ferner wird vorgeschlagen, dass das zumindest eine Rückstellelement in einer Ruhestellung eben ausgebildet ist. Unter "eben" soll in diesem Zusammenhang insbesondere verstanden werden, dass eine Haupterstreckungsfläche des Rückstellelements eben ausgebildet ist. Vorzugsweise soll darunter insbesondere verstanden werden, dass die Haupterstreckungsfläche des Rückstellelements zumindest im Wesentlichen parallel zu einer größten Seitenfläche eines kleinsten gedachten Quaders verläuft, welcher das Rückstellelement gerade noch vollständig umschließt. Bevorzugt soll darunter insbesondere verstanden werden, dass ein kleinster gedachter Quader, welcher die Baueinheit gerade noch vollständig umschließt, eine kürzeste Seitenkante aufweist, deren Länge zumindest annähernd einer Dicke des Rückstellelements entspricht. Vorzugsweise beträgt die Länge der kürzesten Seitenkante des Quaders maximal 2 mm, vorzugsweise maximal 1 mm und besonders bevorzugt maximal 0,5 mm. Bevorzugt beträgt ein Wert der Dicke des Rückstellelements mindestens 50%, vorzugsweise zumindest 70% und besonders bevorzugt zumindest 90% der Länge der kürzesten Seitenkante des Quaders. Dabei soll unter "zumindest im Wesentlichen parallel" insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Dadurch kann insbesondere ein leicht einzubauendes Rückstellelement bereitgestellt werden. Vorzugsweise kann dadurch insbesondere vorteilhaft einfach eine Lage des Rückstellelements erfasst werden. Ferner kann dadurch insbesondere ein leicht herzustellendes Rückstellelement bereitgestellt werden.

Z Gemäß der Erfindung weist das Rückstellelement zumindest ein Anschlagmittel, beispielsweise in Form eines Anschlagfortsatzes, auf, Z welcher in zumindest einer ersten Anschlagsposition des Rotors dazu vorgesehen ist, an einem Anschlag der Rahmeneinheit anzuliegen. Vorzugsweise ist der Rotor dazu vorgesehen, sich in einem Betrieb in einem definierten Winkelbereich oszillierend zu bewegen, wobei der Winkelbereich insbesondere durch zwei Anschlagspositionen begrenzt ist. Bevorzugt ist das Anschlagmittel dazu vorgesehen, eine Verdrehung eines Rotors der Antriebseinheit aus einer Ausgangslage heraus in zumindest eine Richtung, insbesondere in Richtung der ersten Anschlagsposition, zu begrenzen. Vorzugsweise ist das Anschlagmittel dazu vorgesehen, eine oszillierende Bewegung des Rotors in Richtung der ersten Anschlagsposition zu begrenzen. Bevorzugt dient das Anschlagmittel insbesondere zu einer Bereitstellung einer immergleichen Bewegung des Rotors. Vorzugsweise ist das Anschlagmittel als Anschlagsfortsatz insbesondere von einem mechanischen Anschlag gebildet, mit welchem der Rotor bei einer Bewegung bei Erreichen einer Endlage mechanisch an zumindest einem Gegenanschlag anschlägt. Der zumindest eine Gegenanschlag kann dabei insbesondere auf verschiedene Arten geformt werden. Der zumindest eine Gegenanschlag ist insbesondere von einem Anschlagszylinder an der Rahmeneinheit gebildet, wobei insbesondere eine Form keine Rolle spielt. Der Anschlagszylinder ist insbesondere dezentral in der Rahmeneinheit angeordnet. Der Anschlagszylinder weist insbesondere einen runden, ovalen oder n-eckigen Querschnitt auf. Insbesondere weist der Anschlagszylinder eine T-förmige Querschnittsform auf. Der Gegenanschlag ist dabei insbesondere so angeordnet, dass das Anschlagmittel bei einer Verdrehung auf den Gegenanschlag trifft, wobei die Endfläche des Gegenanschlags insbesondere auf eine Form der Endfläche das Anschlagmittels angepasst ist. Vorzugsweise berührt das Anschlagmittel den Gegenanschlag lediglich an einem Punkt auf der Fläche, es kann aber auch eine Berührungslinie sein. Grundsätzlich wäre jedoch auch eine flächige Berührung denkbar, wobei die Flächen auf die Rotationsachse ausgerichtet werden müssten. Bevorzugt beträgt ein minimaler Abstand zwischen dem Anschlagmittel und dem Gegenanschlag in einer Ausgangslage des Rotors von 0,5 mm bis 3 mm, vorzugsweise von 1 mm bis 2 mm. Die Endfläche des Gegenanschlags weist insbesondere eine Fläche von 2 mm² bis 20 mm², vorzugsweise von 5 mm² bis 10 mm² auf. Denkbar wäre auch, um auf einen zweiten Anschlag zu verzichten, dass das Anschlagmittel von einem U-förmigen Gegenanschlag umgeben ist, an welchen das Anschlagmittel bei einer Verdrehung in beide Richtungen anschlägt. Ist das Anschlagmittel als Anschlagsfortsatz ausgebildet soll unter einem "Anschlagsfortsatz" in diesem Zusammenhang insbesondere ein Anschlagselement verstanden werden, welches als ein Fortsatz ausgebildet ist. Das Anschlagmittel ist insbesondere zu einem Anschlagen an einem, insbesondere relativ zu dem Gehäuse und/oder der Rahmeneinheit positionsfesten Gegenanschlag vorgesehen. Hierdurch kann eine Bewegung des Rotors gezielt begrenzt werden. Es kann insbesondere gezielt eine Bewegung des Rotors definiert begrenzt werden. Insbesondere kann dadurch eine Beschädigung von Komponenten der Antriebseinheit, wie beispielsweise des Rückstellelements, insbesondere durch Überbelastung und/oder Überdrehung, verhindert werden. Ferner kann ein manuelles Überdrehen des Rotors, beispielsweise durch einen Bediener, durch Verdrehen der Aufsteckbürste, vermieden werden. Es kann insbesondere eine Beschädigung des Bürstenhandteils gezielt vermieden werden. Ferner kann eine Überbeanspruchung des Rückstellelements vermieden werden, wie beispielsweise beim manuellen Drehen der Abtriebsachse oder wenn der Motor gestartet wird, ohne dass eine Aufsteckbürste auf die Achse montiert ist. Es kann insbesondere eine Begrenzung des Auslenkungswinkels durch geometrische Elemente an dem Rückstellelement und an der Rahmeneinheit bereitgestellt werden. Im normalen Betrieb schlägt das Anschlagmittel vorzugsweise nicht am Gegenanschlag an. Im Betrieb ohne Aufsteckbürste kann das Anschlagmittel am Gegenanschlag anschlagen.

Es wird ferner vorgeschlagen, dass das zumindest eine Rückstellelement zumindest ein weiteres Anschlagmittel aufweist, welches in zumindest einer zweiten Anschlagsposition des Rotors dazu vorgesehen sind, an einem Anschlag der Rahmeneinheit anzuliegen. Bevorzugt ist das weitere Anschlagmittel dazu vorgesehen, eine Verdrehung eines Rotors der Antriebseinheit aus einer Ausgangslage heraus in zumindest eine Richtung, insbesondere in Richtung der zweiten Anschlagsposition, zu begrenzen. Vorzugsweise ist das weitere Anschlagmittel dazu vorgesehen, eine oszillierende Bewegung des Rotors in Richtung der zweiten Anschlagsposition zu begrenzen. Bevorzugt dient das weitere Anschlagmittel insbesondere zu einer Bereitstellung einer immergleichen Bewegung des Rotors. Vorzugsweise ist das Anschlagmittel insbesondere von einem mechanischen Anschlag gebildet, mit welchem der Rotor bei einer Bewegung bei Erreichen einer Endlage mechanisch an einem Gegenanschlag anschlägt. Der zumindest eine Gegenanschlag ist insbesondere von einem Anschlagszylinder an der Rahmeneinheit gebildet, wobei insbesondere eine Form keine Rolle spielt. Der Anschlagszylinder ist insbesondere dezentral in der Rahmeneinheit angeordnet. Der Anschlagszylinder weist insbesondere einen runden, ovalen oder n-eckigen Querschnitt auf. Insbesondere weist der Anschlagszylinder eine T-förmige Querschnittsform auf. Der Gegenanschlag ist dabei insbesondere so angeordnet, dass das Anschlagmittel bei einer Verdrehung auf den Gegenanschlag trifft, wobei die Endfläche des Gegenanschlags insbesondere auf eine Form der Endfläche des das Anschlagmittels angepasst ist. Vorzugsweise berührt das Anschlagmittel den Gegenanschlag lediglich an einem Punkt auf der Fläche, es kann aber auch eine Berührungslinie sein. Grundsätzlich wäre jedoch auch eine flächige Berührung denkbar, wobei die Flächen auf die Rotationsachse ausgerichtet werden müssten. Bevorzugt beträgt ein minimaler Abstand zwischen dem Anschlagmittel und dem Gegenanschlag in einer Ausgangslage des Rotors von 0,5 mm bis 3 mm, vorzugsweise von 1 mm bis 2 mm. Die Endfläche des Gegenanschlags weist insbesondere eine Fläche von 2 mm² bis 20 mm², vorzugsweise von 5 mm² bis 10 mm² auf. Hierdurch kann eine Bewegung des Rotors gezielt begrenzt werden. Es kann insbesondere gezielt eine Bewegung des Rotors definiert begrenzt werden. Insbesondere kann dadurch eine Beschädigung von Komponenten der Antriebseinheit, wie beispielsweise des Rückstellelements, insbesondere durch Überbelastung und/oder Überdrehung, verhindert werden. Ferner kann ein manuelles Überdrehen des Rotors, beispielsweise durch einen Bediener, durch Verdrehen der Aufsteckbürste oder wenn der Motor gestartet wird, ohne dass eine Aufsteckbürste auf die Achse montiert ist, vermieden werden. Es kann insbesondere eine Beschädigung des Bürstenhandteils gezielt vermieden werden. Im normalen Betrieb schlägt das Anschlagmittel nicht am Gegenanschlag an. Im Betrieb ohne Aufsteckbürste kann das Anschlagmittel an dem Gegenanschlag anschlagen.

Das erste und das zweite Anschlagmittel sind vorzugsweise bezüglich der Rotationsachse symmetrisch ausgebildet. Weiter sind auch die beiden Gegenanschläge vorzugsweise symmetrisch zur Längsachse ausgebildet.

Es wird weiter vorgeschlagen, dass das zumindest eine Anschlagmittel und das zumindest eine weitere Anschlagmittel sich an dem ersten Ende des Rückstellelements auf gegenüberliegenden Seiten quer zu einem Grundkörper des Rückstellelements von dem Grundkörper des Rückstellelements weg erstrecken. Vorzugsweise ist jedes Anschlagmittel einer Anschlagsposition zugeordnet. Insbesondere begrenzt jedes Anschlagmittel eine Rotation des Rotors in jeweils eine Richtung. Vorzugsweise ist die Begrenzung symmetrisch zur Rotationsachse, d.h. die Bewegungen sind auf beide Seiten zum Anschlagmittel in einem gleichen Winkel möglich. Vorzugsweise weist das Rückstellelement zumindest annähernd eine T-Form auf, wobei die Anschlagmittel insbesondere den Querbalken der T-Form ausbilden. Bevorzugt sind die Haupterstreckungsrichtungen der Anschlagmittel beziehungsweise hier der Anschlagsfortsätze in einer Ebene angeordnet. Insbesondere sind die Haupterstreckungsebenen der Anschlagmittel beziehungsweise der Anschlagsfortsätze in einer Haupterstreckungsebene der Anschlagmittel beziehungsweise der Anschlagsfortsätze angeordnet. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann vorteilhaft ein Anschlag in das Rückstellelement integriert werden. Ferner kann insbesondere eine vorteilhafte Form, insbesondere eine vorteilhaft einfach herzustellende Form des Rückstellelements bereitgestellt werden. Grundsätzlich wäre auch denkbar, dass die Anschlagmittel beziehungsweise die Anschlagsfortsätze in Längsachsenrichtung in der Mitte des Rückstellelements oder zwischen dem ersten Ende und der Mitte des Rückstellelements angeordnet sind. Dies hätte jedoch den Nachteil, dass nicht mehr das ganze Rückstellelement geschützt ist.

Es hat sich gezeigt, dass auch O-förmige oder dreiecksförmige Rückstellelemente eingesetzt werden können. Diese beiden Formen der Rückstellelemente bewegen sich maßlich im selben Rahmen wie das bereits beschriebene Rückstellelement. Wie beim bereits beschriebenen Rückstellelement kann bei diesen Rückstellelementen die Federkonstante über die Dicke des Elements eingestellt werden. Weiter können diese beiden Varianten auch über die Breite des jeweiligen Rahmens eingestellt werden. Bei diesen beiden Varianten sind die seitlichen Rahmenelemente jeweils auf Torsion und Biegung beansprucht, im Vergleich dazu ist das bereits erklärte Rückstellelement im Wesentlichen auf Torsion im Schaft beansprucht.

Die O-förmigen Rückstellelemente sind wiederum plattenförmig als Blattfeder ausgestaltet. Sie weisen zwei parallele kurze Seiten und zwei parallele lange Seiten auf. Das Rückstellelement hat in diesem Sinne die Form eines Rahmens, da das Innere des Rückstellelements ein Leerraum ist. Das O-förmige Rückstellelement ist im montierten Zustand in der Rahmeneinheit so ausgerichtet, dass die beiden langen Seiten parallel zur Längsachse bzw. zur Rotationsachse ausgerichtet sind. An den beiden kurzen Seiten ist je ein Loch für die Befestigung des Rückstellelements mittels Schrauben ausgebildet. Die Befestigung passiert wiederum an einer Anlagefläche am Rotor sowie einer Befestigungsfläche an der Rahmeneinheit, welche selbstverständlich gegenüber einem T-förmigen Rückstellelement angepasst sind, beispielsweise in Bezug auf die Wandungen. Die Anschlagmittel sind direkt im "Rahmen" integriert. In den Eckbereichen kann das O-förmige Rückstellelement anschlagen und die Bewegung auf diese Weise begrenzt werden.

Die dreiecksförmigen Rückstellelemente sind wiederum plattenförmig als Blattfeder ausgestaltet. Sie sind als gleichschenkliges Dreieck mit zwei langen Schenkeln und einer kurzen dritten Seite gebildet. Das Rückstellelement hat in diesem Sinne die Form eines Rahmens, da das innere des Rückstellelements ein Leerraum ist. Das dreiecksförmige Rückstellelement ist im montierten Zustand in der Rahmeneinheit so ausgerichtet, dass die Mittelsenkrechte parallel zur Längs- bzw. Rotationsachse ausgerichtet ist. An der Spitze zwischen den beiden Schenkeln sowie an der kurzen Seite ist je ein Loch für die Befestigung des Rückstellelements mittels Schrauben ausgebildet. Die Befestigung passiert wiederum an einer Anlagefläche am Rotor sowie einer Befestigungsfläche an der Rahmeneinheit, welche selbstverständlich gegenüber einem T-förmigen Rückstellelement angepasst sind, beispielsweise in Bezug auf die Wandungen. Die Anschlagmittel sind direkt im "Rahmen" integriert. In den Eckbereichen zwischen der kurzen Seite und dem Schenkel kann das dreieckförmige Rückstellelement anschlagen und die Bewegung auf diese Weise begrenzt werden.

Das O-förmige Rückstellelement wie auch das dreiecksförmige Rückstellelement besitzen eine Breite des Rahmens von 1 mm bis 5 mm, vorzugsweise von 1.5 mm bis 3 mm. Die Breite muss nicht überall gleich ausgebildet sein, beispielsweise im Bereich der Befestigungslöcher kann diese variieren.

Zudem wird vorgeschlagen, dass das zumindest eine Anschlagmittel und das zumindest eine weitere Anschlagmittel dazu vorgesehen sind, eine Verdrehung des Rotors auf einen Rotationswinkel von 2° bis 25°, vorzugsweise von 6° bis 18° und besonders bevorzugt von 7° bis 15°, zu begrenzen. Der Rotationswinkel entspricht dabei insbesondere dem totalen Drehwinkel, also einer Addition der Auslenkung links ausgehend von der Ausgangslage und der Auslenkung rechts ausgehend von der Ausgangslage. Dadurch kann insbesondere eine vorteilhaft definierte Bewegung des Rotors erreicht werden. Ferner kann dadurch insbesondere vorteilhaft eine selbstständige Rückstellung des Rotors erreicht werden.

Ferner wird vorgeschlagen, dass das zumindest eine Anschlagmittel und das zumindest eine weitere Anschlagmittel jeweils entlang ihrer Haupterstreckungsrichtung gekrümmt ausgebildet sind. Vorzugsweise erstrecken sich das zumindest eine Anschlagmittel und das zumindest eine weitere Anschlagmittel jeweils senkrecht zu einer Haupterstreckungsrichtung des Rückstellelements von einem Grundkörper des Rückstellelements weg und krümmen sich in eine im montierten Zustand von dem Rotor wegweisende Richtung. Unter "gekrümmt" soll in diesem Zusammenhang insbesondere verstanden werden, dass eine Mittellinie der Anschlagmittel jeweils eine Krümmung größer null aufweist. Vorzugsweise weisen die Mittellinien der Anschlagmittel jeweils einen gekrümmten Verlauf auf. Unter einer "Krümmung" in einem Punkt eines Verlaufs, insbesondere eine Mittellinie, die von Null verschieden ist, soll in diesem Zusammenhang insbesondere eine quadratisch mit einem Abstand zu dem Punkt des Verlaufs anwachsende Abweichung verstanden werden. Dadurch kann insbesondere eine vorteilhaft kompakte Anordnung des Rückstellelements erreicht werden. Es kann insbesondere erreicht werden, dass ein Gegenanschlag für die Anschlagmittel vorteilhaft axial auf Höhe des Rückstellelements angeordnet werden kann. Die Anschlagmittel können vorteilhaft von einem Rotor weggekrümmt sein.

Zudem wäre denkbar, dass das zumindest eine Anschlagmittel und das zumindest eine weitere Anschlagmittel für eine Sensorik genutzt werden könnten. Die Anschlagmittel können insbesondere zu einer Messung eines Auslenkwinkels, eines Anpressdrucks, also insbesondere einem Druck auf das Reinigungselement bzw. die Aufsteckbürste im Gebrauch, einer aktuellen Geschwindigkeit des Rotors und/oder einer Bewegung an sich, wie beispielsweise einer Regelmäßigkeit der Bewegung, genutzt werden. Insbesondere bestehen verschiedene Möglichkeiten für einen Rückbezug, so kann beispielsweise eine Messung an dem Rückstellelement einen Input bzw. eine Rückkoppelung für die Motorsteuerung geben oder ein optisches Element, beispielsweise ein LED, ansteuern. Es kann insbesondere eine Regelung erreicht werden. Es kann beispielsweise über die Messung des Auslenkwinkels festgestellt werden, ob sich dieser bereits in einer kritischen Größe befindet, welche das Rückstellelement beschädigen könnte. Durch diese Feststellung könnte die Motorsteuerung so regeln, dass sich die Auslenkung reduziert. Grundsätzlich wäre auch denkbar, dass auf die Anschlagmittel verzichtet wird, und das Rückstellelement gerade ausgebildet ist. Hierbei wäre insbesondere denkbar, dass ein Anschlag beispielsweise direkt an einem Rotor realisiert wird.

Eine weitere Methodik für die Detektion des Anpressdrucks und der Last auf den Motor ist die Messung des Motorstroms. Damit kann beispielsweise die Bewegung reduziert werden, wenn der Anpressdruck zu groß wird, oder die Bewegung kann reduziert oder das Gerät sogar gestoppt werden, wenn eine Überbelastung auf das Rückstellelement droht. Dies beispielsweise wenn das Gerät ohne Aufsteckbürste betrieben wird.

Durch die Ausbildung von Anschlagmitteln am Rotor und entsprechenden Gegenstücken an der Rahmeneinheit kann die Auslenkung ebenfalls begrenzt werden. Diese Elemente, abgestimmt auf das Rückstellelement, bringen ebenfalls den nötigen Schutz für das Element, damit eine Beschädigung des Rückstellelements vermieden wird.

Des Weiteren wird vorgeschlagen, dass das zumindest eine Rückstellelement ankerförmig ausgebildet ist, wobei das erste Ende des Rückstellelements an einem Kreuz, insbesondere einem Kreuz eines gedachten Ankers der Ankerform, ausgebildet ist. Bevorzugt weist das Rückstellelement zumindest annähernd eine Ankerform auf. Insbesondere ist ein Grundkörper des Rückstellelements dabei von einem Schaft der Ankerform gebildet. Vorzugsweise sind die Anschlagmittel als Anschlagsfortsätze von Armen mit Flunken der Ankerform gebildet. Besonders bevorzugt ist das Rückstellelement in einem Bereich eines Roring der Ankerform mit der Rahmeneinheit verbunden und in einem Bereich eines Kreuzes der Ankerform mit dem Rotor verbunden. Das Rückstellelement weist insbesondere die Form eines Ankers zumindest mit einem Roring, einem Schaft, einem Kreuz, und Armen mit Flunken auf. Gegenüber einem Anker ist das Rückstellelement insbesondere einstückig ausgebildet. Vorzugsweise sind alle Übergänge des Rückstellelements stetig und gerundet. Ferner ist das Rückstellelement insbesondere gratfrei und weist glatte Flächen auf. Die Oberflächenrauheit Rₐ des Rückstellelements beträgt insbesondere von 5 µm bis 50 µm, vorzugsweise von unter 20 µm. Hierdurch können insbesondere Spannungsquellen für Risse, wie insbesondere scharfe Ecken, vermieden werden. Vorzugsweise sind ferner die freien Enden der Anschlagmittel bzw. der Anschlagsfortsätze gerundet. Vorzugsweise ist ein Übergang von dem Grundkörper zu den Anschlagmitteln bzw. den Anschlagsfortsätzen gerundet, wobei ein Radius insbesondere von 0,5 mm bis 5 mm, vorzugsweise von 1,5 mm bis 2,5 mm, beträgt. Bevorzugt ist ein Übergang von einem geraden Teil des Grundkörpers zu einem zweiten Befestigungsabschnitt, in welchem das Rückstellelement mit der Rahmeneinheit verbunden ist, gerundet, wobei ein Radius insbesondere von 0,5 mm bis 5 mm, vorzugsweise von 1,5 mm bis 2,5 mm, beträgt. Vorzugsweise sind alle Kanten im Querschnitt gerundet, wobei ein Rundungsradius von 0,1 mm bis 0,7 mm, vorzugsweise von 0,15 mm bis 0,35 mm beträgt. Der zweite Befestigungsabschnitt ist vorzugsweise an dem zweiten Ende des Rückstellelements angeordnet. Der zweite Befestigungsabschnitt ist insbesondere mittig an einem freien Ende des Rückstellelements angeordnet und umfasst insbesondere ein Loch. Das Loch ist insbesondere auf einer Rotationsachse des Rotors angeordnet. Vorzugsweise weist das Loch einen Durchmesser von 1 mm bis 2 mm, vorzugsweise von 1,3 mm bis 1.7 mm, auf. Vorzugsweise weist das Rückstellelement im Bereich des Kreuzes der Ankerform einen ersten Befestigungsabschnitt auf, in welchem das Rückstellelement mit dem Rotor verbunden ist. Der erste Befestigungsabschnitt ist vorzugsweise an dem ersten Ende des Rückstellelements angeordnet. Der erste Befestigungsabschnitt ist insbesondere mittig im Bereich des Kreuzes der Ankerform des Rückstellelements angeordnet und umfasst insbesondere ein Loch. Das Loch ist insbesondere auf einer Rotationsachse des Rotors angeordnet. Das Loch ist insbesondere symmetrisch, mittig zwischen den Anschlagmitteln angeordnet. Vorzugsweise weist das Loch einen Durchmesser von 1 mm bis 2 mm, vorzugsweise von 1,3 mm bis 1.7 mm, auf. Ein Abstand zwischen dem Loch des ersten Befestigungsabschnitts und dem Loch des zweiten Befestigungsabschnitts beträgt insbesondere von 8 mm bis 16 mm, vorzugsweise von 10 mm bis 14 mm. Das Rückstellelement weist auf einer dem Rotor zugewandten Seite in der Draufsicht insbesondere eine gerade Kante auf, welche sich senkrecht zu einer Achse des Lochs des ersten Befestigungsabschnitts und/oder senkrecht zu einer Haupterstreckungsrichtung des Rückstellelements bzw. der Rotationsachse erstreckt. Ein seitlicher Übergang zu den Anschlagmitteln bzw. Anschlagsfortsätzen ist dabei so gestaltet, dass die gerade Kante mit dem weiteren Verlauf der äußeren Kante trapezförmig (als gleichschenkliges und symmetrisches Trapez), symmetrisch aufweitend gestaltet ist, wobei das Trapez, das heißt die beiden Schenkel insbesondere auch als Rundung geformt sein können. Grundsätzlich wäre auch denkbar, dass sich die Anschlagmittel bzw. die Anschlagsfortsätze gerade erstrecken und eine T-Form mit dem Grundkörper des Rückstellelements bilden. Vorzugsweise ist das Rückstellelement gegenüber einer Ebene, durch welche die Rotationsachse des Rotors verläuft, symmetrisch ausgebildet. Unter "einstückig" soll insbesondere zumindest stoff-schlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Hierdurch kann insbesondere eine vorteilhafte Form des Rückstellelements bereitgestellt werden. Dadurch kann insbesondere eine vorteilhaft kompakte Ausgestaltung des Rückstellelements erreicht werden. Es kann insbesondere erreicht werden, dass ein Gegenanschlag für die Anschlagmittel vorteilhaft in einem axialen Bereich des Rückstellelements angeordnet werden kann. Die Anschlagmittel bzw. Anschlagsfortsätze können vorteilhaft von einem Rotor weggekrümmt sein.

Vorzugsweise weist das Rückstellelement eine Länge von 12 mm bis 20 mm, vorzugsweise von 14 mm bis 18 mm, auf. Entlang der Mittelachse weist das Rückstellelement den ersten Befestigungsabschnitt, einen geraden Teil und den zweiten Befestigungsabschnitt auf. Der gerade Teil weist dabei eine Länge von 3 mm bis 10 mm, vorzugsweise von 5 mm bis 8 mm auf und ist mittig zwischen dem ersten und zweiten Befestigungsabschnitt angeordnet. Der erste Befestigungsabschnitt und der zweite Befestigungsabschnitt sind jeweils auf gegenüberliegenden Seiten des geraden Teils angeordnet und teilen den Rest der Länge gleich auf. Bevorzugt weist das Rückstellelement über die Anschlagmittel eine Breite von 7 mm bis 15 mm, vorzugsweise von 10 mm bis 14 mm, auf. Am geraden Teil weist das Rückstellelement eine Breite von 1 mm bis 4 mm, vorzugsweise von 1,5 mm bis 3 mm, auf. Der zweite Befestigungsabschnitt weist insbesondere eine Breite von 2 mm bis 8 mm, vorzugsweise von 3 mm bis 5 mm, auf.

Es wird ferner vorgeschlagen, dass das zumindest eine Rückstellelement zumindest teilweise aus einem Federstahl besteht. Vorzugsweise ist das Rückstellelement in Form einer Blattfeder ausgebildet, welche zumindest teilweise auf Torsion und/oder Biegung beansprucht wird. Grundsätzlich sind dabei auch Mikrobewegungen in axialer Richtung denkbar, die daher rühren, dass die Blattfeder an zwei Punkten in axialer Richtung fixiert ist und sie sich dreht/tordiert und so natürlich auch in axialer Richtung leicht bewegt bzw. streckt. Bevorzugt besteht das Rückstellelement vollständig aus Federstahl. Bevorzugt ist der Federstahl ein Stahl, der im Vergleich zu anderen Stählen eine höhere Festigkeit besitzt. Vorzugsweise ist der Federstahl eine Legierung. Insbesondere besteht das Rückstellelement aus einem gehärteten Federbandstahl. Das Rückstellelement ist insbesondere aus einem gehärteten Federbandstahl hergestellt. Der Federstahl ist insbesondere magnetisch. Es sind verschiedene, einem Fachmann als sinnvoll erscheinende Federstahlsorten denkbar. Vorzugsweise ist der Federstahl von einem Federstahl nach deutscher Norm 1.1274 mit maximal 1,05 % Kohlenstoff, 0,15 bis 0,30 % Silizium, 0,30 bis 0,45 % Mangan, maximal 0,02 % Phosphor, maximal 0,02 % Schwefel und ca. 0,01 % Chrom und/oder von einem Federstahl nach deutscher Norm 1.1269 mit maximal 0,8 bis 0,9 % Kohlenstoff, 0,15 bis 0,35 % Silizium, 0,40 bis 0,70 % Mangan, maximal 0,025 % Phosphor, 0,025 % Schwefel und weniger als 0,4 % Chrom gebildet. Federstahl muss insbesondere ein großes elastisches Formänderungsvermögen aufweisen. Er muss ferner eine hohe Elastizitätsgrenze, Bruchdehnung und Brucheinschnürung besitzen, sowie eine gute Zeitstand- und Dauerschwingfestigkeit aufweisen. Die Elastizität des Federstahls wird insbesondere beim Herstellungsprozess durch eine spezielle Legierung durch Zugabe von Silizium (Si), Mangan (Mn), Chrom (Cr), Vanadium (V), Molybdän (Mo) und /oder Nickel (Ni) erreicht. Der Federstahl sollte insbesondere eine glatte rissfreie Oberfläche aufweisen. Durch eine abschließende Wärmebehandlung kann die Zugfestigkeit des Federstahls vorzugsweise erhöht werden. Es gibt unmagnetische und magnetische Federstähle. Der Federstahl des Rückstellelements ist insbesondere magnetisch. Vorzugsweise weist das Rückstellelement eine Federkonstante von 5 mNm/° bis 24 mNm/°, bevorzugt 9 bis 13 mNm/° auf. Die Federkonstante ist dabei insbesondere optimiert für Schwingungen von 200 Hz bis 420 Hz, vorzugsweise von 250 Hz bis 350 Hz. Die Federkonstante ist dabei insbesondere optimiert für Schwingungen von 260 Hz +/- 20 Hz. 260 Hz entspricht dabei insbesondere ca. 15600 Schwingungen pro Minute, was wiederum 31200 Wischbewegungen, also Hin- und Her-Bewegungen, entspricht. Und für Schwingungen von 333.3 Hz entspricht dabei insbesondere ca. 20000 Schwingungen pro Minute, was wiederum 40000 Wischbewegungen, also Hin- und Her-Bewegungen, entspricht. Bevorzugt weist das Rückstellelement, insbesondere der Federstahl des Rückstellelements, ferner eine Federhärte von 400 HV (Härte nach Vickers) bis 650 HV, vorzugsweise von 500 HV bis 575 HV, und besonders bevorzugt von 513 HV bis 539 HV auf. Die Federhärte ist dabei insbesondere vorteilhaft für hochbeanspruchte Federn mit einer Dauerbeanspruchung. Das Rückstellelement weist insbesondere eine gute Dauerfestigkeit auf. Dadurch kann insbesondere ein vorteilhaft stabiles und elastisches Rückstellelement bereitgestellt werden. Es kann insbesondere eine vorteilhafte Haltbarkeit des Rückstellelements erreicht werden. Es kann insbesondere eine vorteilhafte Dauerhaftigkeit des Rückstellelements bereitgestellt werden.

Des Weiteren wird vorgeschlagen, dass ein Material des zumindest einen Rückstellelements Kohlenstoff, Silizium, Mangan, Phosphor, Schwefel und/oder Chrom umfasst. Vorzugsweise umfasst das Material des Rückstellelements Kohlenstoff, Silizium, Mangan, Phosphor, Schwefel und Chrom. Bevorzugt wird vorgeschlagen, dass ein Kohlenstoffanteil des Materials des zumindest einen Rückstellelements von 0,7 % bis 1,3 %, vorzugsweise von 0,8 % bis 1,1 %, beträgt. Ferner wird vorgeschlagen, dass ein Siliziumanteil des Materials des zumindest einen Rückstellelements von 0,1 % bis 0,5 %, vorzugsweise von 0,15 % bis 0,4 %, beträgt. Des Weiteren wird vorgeschlagen, dass ein Mangananteil des Materials des zumindest einen Rückstellelements von 0,2 % bis 0,8 %, vorzugsweise von 0,3 % bis 0,7 %, beträgt. Zudem wird vorgeschlagen, dass ein Phosphoranteil des Materials des zumindest einen Rückstellelements von 0,00 % bis 0,04 %, vorzugsweise von 0,00 % bis 0,03 %, beträgt. Es wird ferner vorgeschlagen, dass ein Schwefelanteil des Materials des zumindest einen Rückstellelements von 0,00 % bis 0,04 %, vorzugsweise von 0,00 % bis 0,03 %, beträgt. Es wird weiter vorgeschlagen, dass ein Chromanteil des Materials des zumindest einen Rückstellelements von 0 % bis 0,5 %, vorzugsweise von 0,00 % bis 0,4 %, beträgt. Dadurch kann insbesondere ein vorteilhaft stabiles und elastisches Rückstellelement bereitgestellt werden. Es kann insbesondere eine vorteilhafte Haltbarkeit des Rückstellelements erreicht werden. Insbesondere können dadurch vorteilhafte Materialeigenschaften des Rückstellelements erreicht werden.

Es wird weiter vorgeschlagen, dass die Antriebseinheit zumindest einen Rotor aufweist, der zumindest ein einstückig ausgeführtes Käfigelement umfasst, welches zumindest einen Aufnahmebereich zu einer Aufnahme von zumindest einem Magneten aufweist. Vorzugsweise umfasst das Käfigelement zumindest zwei Aufnahmebereiche, die jeweils zu einer Aufnahme eines Magneten vorgesehen sind. Bevorzugt sind die Magneten jeweils von einem Permanentmagneten gebildet. Grundsätzlich wäre jedoch auch eine andere, einem Fachmann als sinnvoll erscheinende Ausgestaltung des Magneten denkbar. Bevorzugt ist der Rotor insbesondere zu einer Durchführung einer oszillierenden Bewegung vorgesehen. Besonders bevorzugt ist der Rotor insbesondere mit der Schnittstelle, vorzugsweise mit einer Achse der Schnittstelle gekoppelt, welche zu einer Übertragung einer Antriebsbewegung auf eine Aufsteckbürste vorgesehen ist. Dadurch kann insbesondere ein vorteilhafter Rotor bereitgestellt werden. Vorzugsweise kann dadurch insbesondere ein Rotor bereitgestellt werden, der zu einer direkten Aufnahme des zumindest einen Magneten vorgesehen ist. Hierdurch kann insbesondere eine Anzahl an Bauteilen vorteilhaft gering gehalten werden. Unter einem "Käfigelement" soll in diesem Zusammenhang insbesondere ein Element verstanden werden, welches zu einer umgreifenden Aufnahme des zumindest einen Magneten vorgesehen ist. Vorzugsweise bildet das Käfigelement insbesondere einen Aufnahmebereich aus, welcher in zumindest einer Ebene vollständig materiell von dem Käfigelement umschlossen ist.

Zudem wird vorgeschlagen, dass das Käfigelement einen, zumindest einen Aufnahmebereich für den zumindest einen Magneten umfassenden Grundkörper und auf beiden Seiten des Grundkörpers angeordnete Achsfortsätze aufweist, die eine Rotationsachse des Rotors ausbilden. Vorzugsweise umfasst der Grundkörper zumindest zwei nebeneinander angeordnete Aufnahmebereiche. Bevorzugt dienen die Achsfortsätze insbesondere zu einer Lagerung des Käfigelements in der Rahmeneinheit. Vorzugsweise ist der Grundkörper des Käfigelements über die Achsfortsätze drehbar an der Rahmeneinheit gelagert. Besonders bevorzugt dient zumindest einer der Achsfortsätze zudem zu einer Übertragung einer Antriebsbewegung des Grundkörpers auf die Schnittstelle. Vorzugsweise ist einer der Achsfortsätze direkt mit einer Achse der Schnittstelle gekoppelt. Dadurch kann insbesondere eine vorteilhafte Lagerung des Käfigelements erreicht werden. Ferner kann insbesondere eine Anzahl von Bauteilen gering gehalten werden. Es kann ferner eine vorteilhaft einfache und schnelle Montage des Bürstenhandteils erreicht werden. Unter einer "Achse der Schnittstelle" soll in diesem Zusammenhang insbesondere eine aus einem Gehäuse des Bürstenhandteils ragende Welle verstanden werden, welche zu einer direkten Übertragung einer Antriebsbewegung der Antriebseinheit des Bürstenhandteils auf die Aufsteckbürste vorgesehen ist. Vorzugsweise ist die Achse der Schnittstelle insbesondere von einer Metallwelle gebildet. Grundsätzlich wäre jedoch auch eine andere, einem Fachmann als sinnvoll erscheinende Ausgestaltung der Achse denkbar. Das Käfigelement ist vorzugsweise aus einer Hartkomponente gebildet.

Ferner wird vorgeschlagen, dass der Rotor zumindest eine, insbesondere metallische, Abdeckung aufweist, welche zu einer Verschließung des Aufnahmebereichs des Käfigelements vorgesehen ist und die magnetischen Feldlinien bündelt und nach außen zum Blechpaket leitet. Vorzugsweise ist der Aufnahmebereich des Käfigelements zu zumindest einer Seite, vorzugsweise zu zumindest zwei gegenüberliegenden Seiten, hin geöffnet. Bevorzugt weist der Rotor insbesondere zwei Abdeckungen auf, die von gegenüberliegenden Seiten mit dem Grundkörper des Käfigelements verbunden werden und die geöffneten Seiten der Aufnahmebereiche verdecken. Besonders bevorzugt sind die Abdeckungen mit dem Käfigelement verschraubt oder verklebt. Des Weiteren können die Abdeckungen mit geometrischen Elementen fixiert werden. Beispielsweise mit einer Einfahrgeometrie an einem Ende und mit einem oder mehreren hakenförmigen Formschlusselementen an den anderen Seiten. Die Fixierung mit den hakenförmigen Formschlusselementen kann auch nur an dem der Einfahrgeometrie gegenüberliegenden Ende passieren, wenn die Abdeckungen in einer Mulde zu liegen kommen, die die seitliche Verschiebung durch ihre Seitenwände unterbindet. Dadurch kann insbesondere eine vorteilhaft sichere Aufnahme des zumindest einen Magneten erreicht werden. Vorzugsweise kann dadurch insbesondere eine vorteilhaft positionsgenaue Aufnahme des Magneten und eine bessere Verteilung des Magnetfelds erreicht werden. Ferner kann eine vorteilhaft einfache und leichte Montage des Bürstenhandteils erreicht werden. Der Aufnahmebereich des Käfigelements ist derart gestaltet, dass die Magnete über den Aufnahmebereich hinausstehen. Dies stellt sicher, dass ein möglichst kleiner Spalt zwischen den Magneten und der metallischen Abdeckung besteht. Vorzugsweise berühren sich die Magnete und die metallische Abdeckung. Die mechanische Verbindung beispielsweise durch Verkleben verhindert ein Verschieben der Magnete im Käfigelement während des Betriebs, was zu Geräuschen führen kann. Des Weiteren wird vorgeschlagen, dass das Rückstellelement mit dem ersten Ende drehfest mit einem ersten Achsfortsatz des Rotors gekoppelt ist. Vorzugsweise ist das Rückstellelement insbesondere mittels einer Schraubverbindung mit dem ersten Achsfortsatz verbunden. Grundsätzlich wären jedoch auch andere Verbindungsmethoden denkbar. Dadurch kann insbesondere vorteilhaft eine selbstständige Rückstellung des Rotors erreicht werden. Es kann insbesondere erreicht werden, dass die Achse der Schnittstelle jeweils immer in derselben Stellung stehen bleibt. Ferner kann dadurch insbesondere eine vorteilhafte Montage des Rückstellelements erreicht werden.

Es wird ferner vorgeschlagen, dass der Achsfortsatz eine parallel zu der Rotationsachse des Rotors und der Rotationsachse des Rotors zugewandte Anlagefläche zu einer Fixierung des ersten Endes des Rückstellelements aufweist. Vorzugsweise ist der Achsfortsatz zumindest annähernd halbzylinderförmig ausgebildet, wobei insbesondere eine Mittelachse des Grundzylinders zumindest annähernd einer Rotationsachse entspricht. Bevorzugt ist das Rückstellelement dazu vorgesehen, in einem Bereich des ersten Befestigungsabschnitts mit einer Haupterstreckungsfläche an der Anlagefläche anzuliegen. In einem montierten Zustand in einer Ausgangslage des Rotors erstreckt sich eine Haupterstreckungsebene des Rückstellelements insbesondere parallel zu der Anlagefläche. Vorzugsweise ist die Anlagefläche eben ausgebildet. Der Achsfortsatz bildet insbesondere ein freies, gelagertes Ende des Rotors. Dadurch kann insbesondere eine vorteilhafte Fixierung des Rückstellelements an dem Rotor erreicht werden. Es kann insbesondere eine vorteilhaft einfache Montage erreicht werden.

Es wird weiter vorgeschlagen, dass ein kleinster Abstand zwischen der Anlagefläche und der Rotationsachse des Rotors zumindest annähernd 50% der geringsten Dicke des Rückstellelements entspricht. Vorzugsweise erstreckt sich die Rotationsachse des Rotors zumindest annähernd durch die Anlagefläche des Achsfortsatzes. Insbesondere erstreckt sich die Anlagefläche mit einem geringen Abstand parallel zu der Rotationsachse des Rotors. Bevorzugt beträgt ein kleinster Abstand zwischen der Anlagefläche und der Rotationsachse des Rotors von 0,1 mm bis 0,5 mm, vorzugsweise von 0,15 mm bis 0,35 mm. Vorzugsweise erstreckt sich in einem montierten Zustand des Rückstellelements, in einem axialen Bereich des Achsfortsatzes, das Rückstellelement durch die Rotationsachse. Bevorzugt erstreckt sich die Rotationsachse über die gesamte Haupterstreckung des Rückstellelements durch das Rückstellelement. Insbesondere erstreckt sich die Rotationsachse durch einen geometrischen Mittelpunkt des Rückstellelements. Besonders bevorzugt verläuft die Rotationsachse entlang einer Mittelachse des Rückstellelements. Weiter besonders bevorzugt verläuft die Rotationsachse entlang der Längssymmetrieachse des Rückstellelements. Dadurch kann insbesondere eine optimale Zentrierung des Rückstellelements erreicht werden. Es kann insbesondere erreicht werden, dass sich die Rotationsachse durch einen geometrischen Mittelpunkt des Rückstellelements erstreckt.

Zudem wird vorgeschlagen, dass die Anlagefläche in einer Vertiefung angeordnet ist, welche dazu vorgesehen ist, das Rückstellelement formschlüssig parallel zu der Anlagefläche zu sichern. Die Anlagefläche ist insbesondere von einer vertieften Fläche gebildet. Vorzugsweise ist das Rückstellelement zumindest teilweise in der Vertiefung des Achsfortsatzes formschlüssig gehalten. Die Vertiefung dient insbesondere zu einer temporären Sicherung und Ausrichtung des Rückstellelements. Der erste Befestigungsabschnitt des Rückstellelements kann insbesondere definiert und ausgerichtet in die Vertiefung eingelegt werden. Die Vertiefung ist insbesondere zumindest teilweise korrespondierend zu dem ersten Befestigungsabschnitt ausgebildet. Vorzugsweise weist die Anlagefläche insbesondere eine Fläche von 15 mm² bis 35 mm³, vorzugsweise von 18 mm² bis 28 mm², auf. Dadurch kann insbesondere eine vorteilhafte Montage des Rückstellelements erreicht werden. Es kann insbesondere eine temporäre Sicherung und Ausrichtung des Rückstellelements an der Anlagefläche erreicht werden. Hierdurch kann wiederum erreicht werden, dass das Rückstellelement bei einer Montage in einer 0-Stellung fixiert wird.

Die Vertiefung um die Anlagefläche für den ersten oder zweiten Befestigungsabschnitt hat eine Tiefe von mindestens 50%, bevorzugt von mindestens 75%, am meisten bevorzugt von mindestens 90% der Höhe des Rückstellelements.

Ferner wird vorgeschlagen, dass die Antriebseinheit zumindest ein erstes, als Schraube ausgebildetes Befestigungsmittel aufweist, welches dazu vorgesehen ist, das Rückstellelement mit einem ersten Achsfortsatz des Rotors zu verbinden. Des Weiteren wird vorgeschlagen, dass die Antriebseinheit zumindest ein zweites, als Schraube ausgebildetes Befestigungsmittel aufweist, welches dazu vorgesehen ist, das Rückstellelement auf einem Fortsatz der Rahmeneinheit zu fixieren. Vorzugsweise ist das Rückstellelement am gegenüberliegenden Ende mittels des Befestigungsmittels an dem Rotor und der Rahmeneinheit fixiert. Das als Schraube ausgebildete erste Befestigungsmittel ist insbesondere durch das Loch des ersten Befestigungsabschnitts in eine Bohrung des ersten Achsfortsatzes des Rotors eingeschraubt. Das als Schraube ausgebildete zweite Befestigungsmittel ist insbesondere durch das Loch des zweiten Befestigungsabschnitts in eine Bohrung der Rahmeneinheit eingeschraubt. Die Rahmeneinheit weist insbesondere eine erhöhte Befestigungsfläche auf, auf welcher das Rückstellelement fixiert ist. Die Befestigungsfläche befindet sich insbesondere auf einem Fortsatz der Rahmeneinheit. Die Befestigungsfläche ist insbesondere von einer quadratischen oder rechteckigen Fläche gebildet. Die Befestigungsfläche weist insbesondere eine Größe von 8 mm² bis 30 mm², vorzugsweise von 12 mm² bis 20 mm², auf. Bevorzugt ist die Befestigungsfläche auf zumindest zwei Seiten durch erhöhte Wandungen des Fortsatzes begrenzt. Die Wandungen dienen insbesondere zu einer temporären Sicherung und Ausrichtung des Rückstellelements in seitlicher Richtung. Die Befestigungsfläche und die Anlagefläche liegen in einer Ausgangsstellung in einer Ebene und liegen jeweils zumindest annähernd in der Rotationsachse. Dadurch kann insbesondere eine vorteilhaft sichere Fixierung des Rückstellelements erreicht werden. Ferner kann dadurch insbesondere eine vorteilhaft kompakte Anordnung des Rückstellelements erreicht werden. Grundsätzlich wäre jedoch auch eine andere, einem Fachmann als sinnvoll erscheinende Befestigung des Rückstellelements denkbar, wie insbesondere durch eine Klebeverbindung, eine Nietverbindung, eine Schmelzverbindung, wie insbesondere Nieten durch Aufschmelzen eines Zapfens, welcher insbesondere an der Befestigungsfläche der Rahmeneinheit angebracht ist, und/oder durch Umspritzen des Rückstellelements direkt im Kunststoff des Rotors und/oder der Rahmeneinheit.

Des Weiteren wird vorgeschlagen, dass die Antriebseinheit von einem Schwingankermotor gebildet ist. Vorzugsweise wird der Schwingankermotor sinusförmig angesteuert. Hierdurch kann insbesondere eine verbesserte Bewegung des Rotors der Antriebseinheit erreicht werden. Es kann insbesondere eine vorteilhaft ruhige Bewegung des Rotors erreicht werden. Ferner können Geräusche der Antriebseinheit zuverlässig vermieden und der Energiebedarf für den Betrieb reduziert werden. Unter einem "Schwingankermotor" soll in diesem Zusammenhang insbesondere ein Antrieb verstanden werden, welcher zu einer elektromagnetischen Erzeugung einer Schwingungsbewegung, insbesondere Oszillationsbewegung, vorgesehen ist. Der Antrieb umfasst insbesondere ein positionsfestes Blechpaket mit einer Erregerspule und einen beweglichen Rotor, welcher zumindest einen Magneten umfasst. Vorzugsweise ist der Rotor durch eine Rückstellfeder in Ruhelage gehalten.

Es wird weiter vorgeschlagen, dass die Antriebseinheit zumindest einen Stator aufweist, der einen einstückig ausgeführten Träger, ein in den Träger eingesetztes Blechpaket und eine das Blechpaket umgreifende Spule aufweist. Vorzugsweise bildet das Blechpaket einen Eisenkern des Stators aus, während die Spule eine Erregerspule des Stators ausbildet. Bevorzugt wird die Spule des Stators während eines Betriebs sinusförmig angesteuert. Besonders bevorzugt sind die Spule und das Blechpaket kontaktlos. Vorzugsweise ist der Stator insbesondere von einem vorgefertigten Modul gebildet, welches in einem Stück eingesetzt werden kann. Dadurch kann insbesondere ein vorteilhaft kompakter und leicht zu montierender Stator bereitgestellt werden. Es kann insbesondere eine Anzahl an Bauteilen gering gehalten werden. Ferner kann dadurch insbesondere ein vorteilhaft modularer Stator bereitgestellt werden. Unter einem "Blechpaket" soll in diesem Zusammenhang insbesondere ein Paket aus mehreren miteinander verbundenen und/oder aneinander anliegenden Blechteilen verstanden werden. Vorzugsweise weisen die Blechteile jeweils dieselbe Form auf und sind in derselben Ausrichtung dicht an dicht zu einem Paket verbunden.

Zudem wird vorgeschlagen, dass der Träger der Antriebseinheit direkt mit der Rahmeneinheit verbunden ist und einen Rotor der Antriebseinheit von zumindest einer Seite abdeckt. Vorzugsweise ist der Träger der Antriebseinheit direkt an die Rahmeneinheit angeschraubt. Es wäre jedoch auch eine andere, einem Fachmann als sinnvoll erscheinende Art der Verbindung denkbar. Bevorzugt ist der Rotor der Antriebseinheit insbesondere in einem Aufnahmebereich der Rahmeneinheit aufgenommen, wobei der Aufnahmebereich vorzugsweise zu einer, bevorzugt zu zumindest zwei Seiten hin, geöffnet ist. Der Träger ist insbesondere dazu vorgesehen, zumindest eine geöffnete Seite des Aufnahmebereichs der Rahmeneinheit zu verschließen. Vorzugsweise wird der Rotor der Antriebseinheit in einem montierten Zustand zumindest teilweise von dem Blechpaket des Stators umgriffen. Dadurch kann insbesondere ein vorteilhaft leicht zu montierendes Bürstenhandteil bereitgestellt werden. Es kann insbesondere eine vorteilhaft einfache und zuverlässige Ausrichtung des Stators gegenüber dem Rotor während einer Montage erreicht werden. Hierdurch können insbesondere Montagefehler vermieden werden. Dabei ist es sehr wichtig, dass der Rotor in Draufsicht exakt mittig im Stator angeordnet ist, damit ein optimaler Wirkungsgrad erreicht werden kann. Dies bedeutet, dass der Luftspalt links und rechts zwischen dem Rotor und dem Blechpaket des Stators im Wesentlichen gleich groß ist. Optimalerweise wird die Distanz zwischen Blechpaket und metallischer Abdeckung beziehungsweise dem Rotor so gering wie möglich gehalten. Dabei muss im Wesentlichen die Drehbarkeit des Rotors ohne Kollision mit dem Blechpaket möglich sein. Durch die geringen Abstände wird ein kleiner magnetischer Widerstand gewährleistet.

Es wird ferner vorgeschlagen, dass das elektrische Bürstenhandteil zumindest eine Rotorabdeckung aufweist, welche fest mit der Rahmeneinheit verbunden ist und zusammen mit der Rahmeneinheit zu einer Lagerung und/oder Fixierung eines Rotors der Antriebseinheit vorgesehen ist. Vorzugsweise ist der Rotor der Antriebseinheit insbesondere in einem Aufnahmebereich der Rahmeneinheit aufgenommen, wobei der Aufnahmebereich vorzugsweise zu einer, vorzugsweise zu zumindest zwei, Seiten hin geöffnet ist. Bevorzugt wird zumindest eine geöffnete Seite des Aufnahmebereichs der Rahmeneinheit von einem Träger der Antriebseinheit verschlossen, wobei die Rotorabdeckung insbesondere die zweite geöffnete Seite verschließt. Vorzugsweise ist die Rotorabdeckung mit der Rahmeneinheit verschraubt. Es wäre jedoch auch eine andere, einem Fachmann als sinnvoll erscheinende Art der Verbindung denkbar. Besonders bevorzugt bilden sowohl die Rotorabdeckung als auch die Rahmeneinheit zumindest eine halbkreisförmige Achsaufnahme zu einer Aufnahme von zumindest einem Achsfortsatz des Rotors aus. Bevorzugt ist der Rotor direkt zwischen der Rahmeneinheit und der Rotorabdeckung gelagert. Hierdurch kann eine vorteilhaft einfache und schnelle Montage erreicht werden. Es kann insbesondere eine vorteilhafte Abdeckung und Lagerung des Rotors bereitgestellt werden. Ferner kann insbesondere ein vorteilhaft schneller und positionsgenauer Einbau des Rotors gewährleistet werden. Vorzugsweise dienen die Rotorabdeckung und die Rahmeneinheit zudem zu einer Lagerung und/oder Abdichtung der Achse der Schnittstelle. Die Achse ist vorzugsweise über eine Dichtung in einer Achsaufnahme gelagert, die sich aus einer halbkreisförmigen Achsaufnahme der Rahmeneinheit und einer halbkreisförmigen Achsaufnahme der Rotorabdeckung zusammensetzt.

Ferner wird vorgeschlagen, dass das elektrische Bürstenhandteil zumindest einen Montagering und zumindest eine Dichtungskappe aufweist, welche zu einer Verbindung der Rotorabdeckung und der Rahmeneinheit zueinander vorgesehen sind. Der Montagering ist insbesondere dazu vorgesehen, über ein achsseitiges Ende der Rotorabdeckung und der Rahmeneinheit geschoben zu werden. Bevorzugt umgreift der Montagering in einem montierten Zustand jeweils das achsseitige Ende der Rotorabdeckung und der Rahmeneinheit. Vorzugsweise dient der Montagering insbesondere zu einer Zentrierung der Rotorabdeckung und der Rahmeneinheit. Insbesondere dient der Montagering zu einer Achsführung der Achse der Schnittstelle. Die Achse ist insbesondere durch den Montagering hindurchgeführt. Der Montagering hat neben der Verbindungsfunktion insbesondere zudem eine Stützfunktion für die Dichtungskappe. Die Dichtungskappe ist insbesondere dazu vorgesehen, mit der Rahmeneinheit und/oder der Rotorabdeckung zu verrasten. Ferner dient die Dichtungskappe insbesondere zu einer Abdichtung eines Gehäuseinneren gegenüber der Schnittstelle. Die Dichtungskappe liegt dazu insbesondere mit Übermaß an der Achse an, sodass die Dichtungskappe bei einer Drehbewegung der Achse zumindest teilweise tordiert. Vorzugsweise dient die Dichtungskappe zu einer Abdichtung zwischen dem Gehäuse und der Rahmeneinheit.

Das Handteil bzw. die Achse wird in zumindest einem Betriebszustand mit einer Frequenz von 200 Hz bis 320 Hz, vorzugsweise von 240 Hz bis 280 Hz betrieben. Der Auslenkwinkel der Achse pro Seite der Nullstellung liegt insbesondere in einem Bereich von 2,5° bis 9°, vorzugsweise von 4° bis 7°.

Zudem geht die Erfindung aus von einem Verfahren zur Herstellung des elektrischen Bürstenhandteils.

Eine Herstellung des Rückstellelements erfolgt insbesondere aus einem Stahlblech. Das Stahlblech ist dabei insbesondere längsgewalzt. Grundsätzlich wäre jedoch auch denkbar, dass das Stahlblech quergewalzt ist. Zu einer Herstellung erfolgt in einem ersten Schritt ein Stanzen der Kontur und/oder der Löcher des Rückstellelements. Grundsätzlich wäre jedoch auch denkbar, dass die Löcher gebohrt werden. Anschließend erfolgt insbesondere ein Entgraten und Verrunden des Rückstellelements, dies kann beispielsweise mittels Gleitschleifen, insbesondere Trowalisieren, erfolgen. Grundsätzlich wäre jedoch auch eine Herstellung durch Lasern denkbar, dies ist jedoch insbesondere schlecht, da der Startpunkt des Laservorgangs überbeansprucht ist. Daher müsste bei der Wahl des Startpunktes beachtet werden, dass die Temperaturverteilung in diesem Bereich keine Folgeprobleme verursacht, oder dass er komplett außerhalb der Geometrie des Rückstellelements liegt. Weitere Möglichkeiten zur Herstellung des Rückstellelements in absteigender Priorität sind Ätzen, Feinerodieren/Drahterodieren, Fräsen, Wasserstrahlschneiden, Stanzen, Lasern oder Kombinationen davon

Zum Erreichen der nötigen Oberflächengüte wird ein Trowalisieren insbesondere nach dem Fräsen, Stanzen und Wasserstrahlschneiden empfohlen. Insbesondere durch die Nachbearbeitung durch Trowalisieren soll erreicht werden, dass keine Diskontinuitäten wie Risse, Kratzer oder Furchen entstehen, welche sich im Gebrauch zu Brüchen entwickeln können.

Eine Montage des Rückstellelements an der Rahmeneinheit bei einer Herstellung des elektrischen Zahnbürstenhandteils erfolgt insbesondere von einer Seite, vorzugsweise von oben. Die Montage erfolgt dabei durch die Befestigung der zwei als Schrauben ausgebildeten Befestigungsmittel. Dies hat den Vorteil, dass keine Ausrichtung des Rotors im Nicht-Gebrauchszustand nötig ist, die Ausrichtung erfolgt selbsttätig durch die Bohrungen und die Ausrichtung der Montageflächen, sowie durch das ebene Rückstellelement selbst. Die Ausrichtung erfolgt insbesondere automatisch, da das Rückstellelement enge Fertigungstoleranzen hat und auch die geometrische Anordnung optimiert ist. Die Flächen am Rotor und an der Rahmeneinheit werden durch das Rückstellelement zueinander ausgerichtet für eine Ausgangsstellung. Die Flächen müssen dabei insbesondere genau ausgerichtet sein, damit das Rückstellelement nicht zusätzlich belastet wird, was einen Bruch zur Folge hätte. Somit ist am Schluss das ganze System aus Rotor und Achse auf die auf die Achse montierte Aufsteckbürste ausgerichtet.

Die Eigenschaften des Bürstenhandteils, der Aufsteckbürste, Ansteuerung durch Software/Hardware und des Rückstellelements sind insbesondere präzise aufeinander abgestimmt, um eine optimale Performance zu erreichen.

Die Aufsteckbürste, welche vorzugsweise mit dem vorliegend beschriebenen Gerät verwendet wird, ist so gestaltet, dass sie direkt auf die Achse montiert wird. Sie ist aufgesteckt und wechselbar. Dabei ist ihre einzige Verbindung zum Gerät über die Achse festgelegt. Die Achse und somit das ganze Antriebssystem tragen ihr Gewicht, es ist somit 1:1 mit dem Antrieb gekoppelt.

Die Aufsteckbürste ist zumindest aus einer Hartkomponente vorzugsweise aus Polypropylen gestaltet, welche zumindest die Grundstruktur bildet. Teil der Grundstruktur sind zumindest die Schnittstellengeometrie zur Achse mit entsprechenden Klemm- und/oder Rastmitteln sowie die Struktur im eigentlichen Bürstenkopf zur Fixierung der Filamente. Daneben können weitere Hart- und/oder Weichkomponenten zur Formung des Körpers genutzt werden. Der Einsatz von Weichkomponenten kann für die Ausformung von Reinigungselementen im Bürstenkopf wie auch als Schutz um den Körper aus einer Hartkomponente geformt sein, um ein Stossen des Körpers gegen die Zähne zu dämpfen.

Die Aufsteckbürste hat ein Gewicht von 3 g bis 10 g, vorzugsweise von 4 g bis 8 g. Die Länge der Aufsteckbürste beträgt zwischen 50 mm und 90 mm, vorzugsweise von 65 mm bis 75 mm. Die maximale Breite der Aufsteckbürste beträgt zwischen 8 mm und 17 mm, vorzugsweise von 10 mm bis 15 mm.

Ferner geht die Erfindung aus von einer elektrischen Zahnbürste mit dem elektrischen Bürstenhandteil und mit der Aufsteckbürste.

Die Begriffe "axial" und "radial" sind in diesem Zusammenhang insbesondere auf eine Haupterstreckungsachse des elektrischen Bürstenhandteils bezogen, sodass der Ausdruck "axial" insbesondere eine Richtung bezeichnet, die parallel oder koaxial zu einer der Haupterstreckungsachsen verläuft. Ferner bezeichnet der Ausdruck "radial" im Folgenden insbesondere eine Richtung, die senkrecht zu einer der Haupterstreckungsachsen verläuft. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt, und insbesondere einen geometrischen Mittelpunkt des Objekts schneidet.

Ferner sollen die Begriffe "Oberseite" oder "Vorderseite" der Zahnbürste in diesem Zusammenhang insbesondere als jene Seite der Zahnbürste verstanden werden, auf welcher der Daumen aufgelegt wird. Die Ober - oder Vorderseite ist normalerweise auch jene Seite, auf welche das Borstenfeld, insbesondere des Bürstenkopfes der Aufsteckbürste, gerichtet ist. Als "Unterseite" oder "Rückseite" der Zahnbürste soll insbesondere jene Seite verstanden werden, die dem Borstenfeld des Bürstenkopfs abgewandt ist. Des Weiteren sind die Begriffe "linke Seite" und "rechte Seite" jeweils auf eine Betrachtung der Vorderseite bezogen. Als "Unterseite des Kopfplättchens" wird jene Seite bezeichnet, welche in die Ausnehmung des Grundkörpers gelegt wird und in Richtung Unterseite der Zahnbürste zeigt. Entsprechend zeigt die "Oberseite des Kopfplättchens" in Richtung der Oberseite der Zahnbürste.

Das erfindungsgemäße elektrische Bürstenhandteil, die elektrische Zahnbürste sowie das Verfahren sollen hierbei nicht auf die oben beschriebene Anwendung und Ausführungsform beschränkt sein. Insbesondere können das elektrische Bürstenhandteil, die elektrische Zahnbürste sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine elektrische Zahnbürste mit einem erfindungsgemäßen elektrischen Bürstenhandteil und mit einer Aufsteckbürste in einer ersten 3D-Ansicht,
- Fig. 2: die elektrische Zahnbürste mit dem erfindungsgemäßen elektrischen Bürstenhandteil und mit der Aufsteckbürste in einer zweiten 3D-Ansicht,
- Fig. 3: einen Teil des erfindungsgemäßen Bürstenhandteils mit der Rahmeneinheit, mit dem Energiespeicher, mit der Antriebseinheit und mit der Schnittstelle in einer ersten 3D-Ansicht,
- Fig. 4: den Teil des erfindungsgemäßen Bürstenhandteils mit der Rahmeneinheit, mit dem Energiespeicher, mit der Antriebseinheit und mit der Schnittstelle in einer zweiten 3D-Ansicht,
- Fig. 5: den Teil des erfindungsgemäßen Bürstenhandteils mit der Rahmeneinheit, mit dem Energiespeicher, mit der Antriebseinheit und mit der Schnittstelle in einer Seitenansicht,
- Fig. 6: den Teil des erfindungsgemäßen Bürstenhandteils mit der Rahmeneinheit, mit dem Energiespeicher, mit der Antriebseinheit und mit der Schnittstelle in einer Draufsicht,
- Fig. 7: einen Detailausschnitt des Teils des erfindungsgemäßen Bürstenhandteils,
- Fig. 8: den Teil des erfindungsgemäßen Bürstenhandteils mit der Rahmeneinheit, mit dem Energiespeicher, mit der Antriebseinheit und mit der Schnittstelle in einer Explosionsdarstellung in der ersten 3D-Ansicht,
- Fig. 9: den Teil des erfindungsgemäßen Bürstenhandteils mit der Rahmeneinheit, mit dem Energiespeicher, mit der Antriebseinheit und mit der Schnittstelle in einer Explosionsdarstellung in der zweiten 3D-Ansicht,
- Fig. 10: den Teil des erfindungsgemäßen Bürstenhandteils mit der Rahmeneinheit, mit dem Energiespeicher, mit der Antriebseinheit und mit der Schnittstelle in einer Schnittdarstellung entlang der Schnittlinie X-X durch das Rückstellelement,
- Fig. 11: den Teil des erfindungsgemäßen Bürstenhandteils mit der Rahmeneinheit, mit dem Energiespeicher, mit der Antriebseinheit und mit der Schnittstelle in einer Explosionsdarstellung in einer Schnittdarstellung entlang der Schnittlinie XI-XI durch das Rückstellelement,
- Fig. 12: das Rückstellelement der Antriebseinheit des erfindungsgemäßen Bürstenhandteils in einer Draufsicht,
- Fig. 13: das Rückstellelement der Antriebseinheit des erfindungsgemäßen Bürstenhandteils in einer Seitenansicht,
- Fig. 14: das Rückstellelement der Antriebseinheit des erfindungsgemäßen Bürstenhandteils in einer 3D-Ansicht,
- Fig. 15: ein alternatives Rückstellelement einer Antriebseinheit eines erfindungsgemäßen Bürstenhandteils in einer 3D-Ansicht und
- Fig. 16: ein alternatives Rückstellelement einer Antriebseinheit eines erfindungsgemäßen Bürstenhandteils in einer 3D-Ansicht.

### Beschreibung der Ausführungsbeispiele

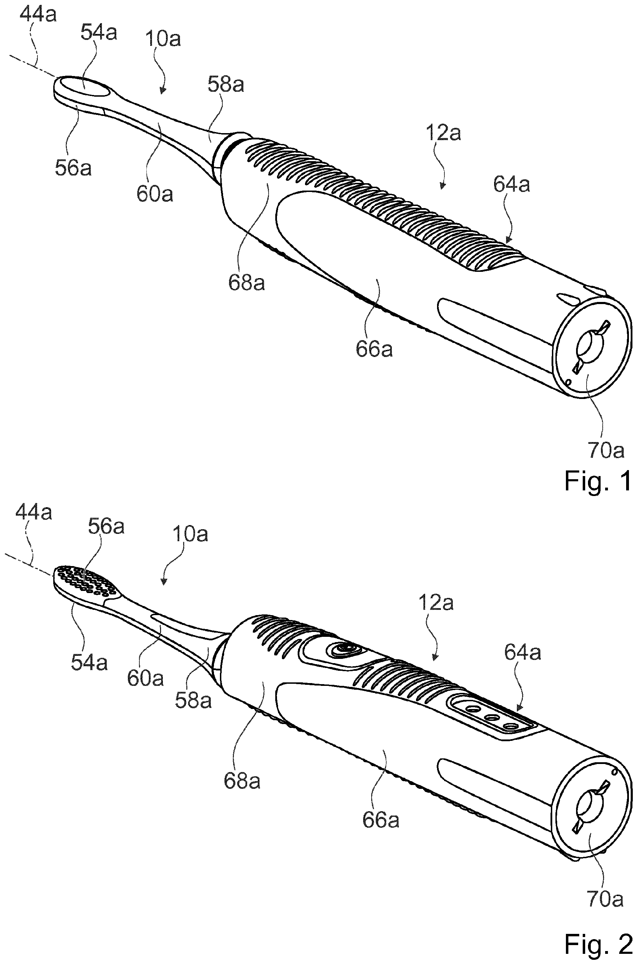

Figur 1 und 2 zeigen eine elektrische Zahnbürste mit einem elektrischen Bürstenhandteil 12a und mit einer Aufsteckbürste 10a. Die Aufsteckbürste 10a ist für das Bürstenhandteil 12a vorgesehen. Die Aufsteckbürste 10a ist für das elektrische Bürstenhandteil 12a vorgesehen. Die Aufsteckbürste 10a ist von einer Wechselbürste gebildet. Grundsätzlich ist die Anwendung der Aufsteckbürste 10a und/oder einer Schnittstellenaufnahme bzw. Schnittstelle 14a für elektrische Bürstenhandteile 12a mit schwenkender Bewegung oder mit vibrierender Bewegung ausgelegt. Die Aufsteckbürste 10a und/oder die Schnittstellenaufnahme bzw. Schnittstelle 14a kann jedoch auch für andere Produkte eingesetzt werden, wie beispielsweise manuelle Zahnbürsten, wie insbesondere Mehrwegzahnbürsten , wie z.B. Wechselkopfzahnbürsten, alternative elektrische Zahnbürsten, wie insbesondere mit translatorischen und/oder drehenden und/oder oszillierenden Bewegungen, mit Aufsteckteilen mit Interdentalreinigern, wie insbesondere Interdentalbürsten mit eingedrehten Borsten und/oder Zungenreiniger.

Die Aufsteckbürste 10a weist einen Kopfabschnitt 54a auf. Der Kopfabschnitt 54a umfasst einen Bürstenkopf 56a. Ferner weist die Aufsteckbürste 10a einen Aufsteckabschnitt 58a auf. Der Aufsteckabschnitt 58a umfasst eine nicht weiter sichtbare Schnittstellenaufnahme der Aufsteckbürste 10a. Des Weiteren weist die Aufsteckbürste 10a einen zwischen dem Kopfabschnitt 54a und dem Aufsteckabschnitt 58a angeordneten Halsabschnitt 60a auf. Das Bürstenhandteil 12a weist die Schnittstelle 14a zu einer Kopplung mit der Aufsteckbürste 10a auf. Die Schnittstelle 14a weist eine Achse 62a zu einem direkten Eingriff in die Schnittstellenaufnahme der Aufsteckbürste 10a auf. Die Achse 62a ist von einer Metallwelle gebildet. Grundsätzlich wäre jedoch auch eine andere, einem Fachmann als sinnvoll erscheinende Ausgestaltung der Achse 62a denkbar. Ferner weist das Bürstenhandteil 12a ein Gehäuse 64a auf. Das Gehäuse 64a weist einen aus einer Hartkomponente bestehenden Grundkörper 66a auf. Der Grundkörper 66a bildet eine tragende Struktur des Gehäuses 64a. Der Grundkörper 66a ist einstückig ausgeführt. Grundsätzlich wäre jedoch auch eine andere, einem Fachmann als sinnvoll erscheinende Ausgestaltung denkbar, wie beispielsweise eine zweischalige Ausgestaltung. Ferner weist das Gehäuse 64a eine aus einer Weichkomponente bestehende Umspritzung 68a auf. Die Umspritzung 68a ist teilweise auf eine Außenfläche des Grundkörpers 66a angeordnet. Die Umspritzung 68a bildet einen Griffbereich des Gehäuses 64a aus. Ferner weist das elektrische Bürstenhandteil 12a einen Deckel 70a auf. Der Deckel 70a ist dazu vorgesehen, das Gehäuse 64a auf einer der Schnittstelle 14a abgewandten Seite zu verschließen (Figuren 1, 2).

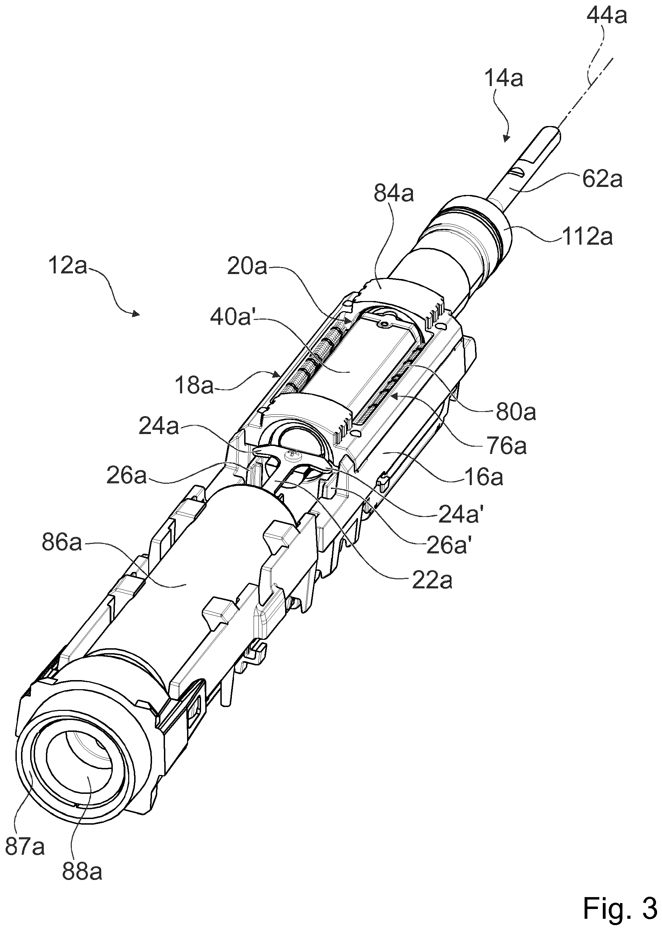

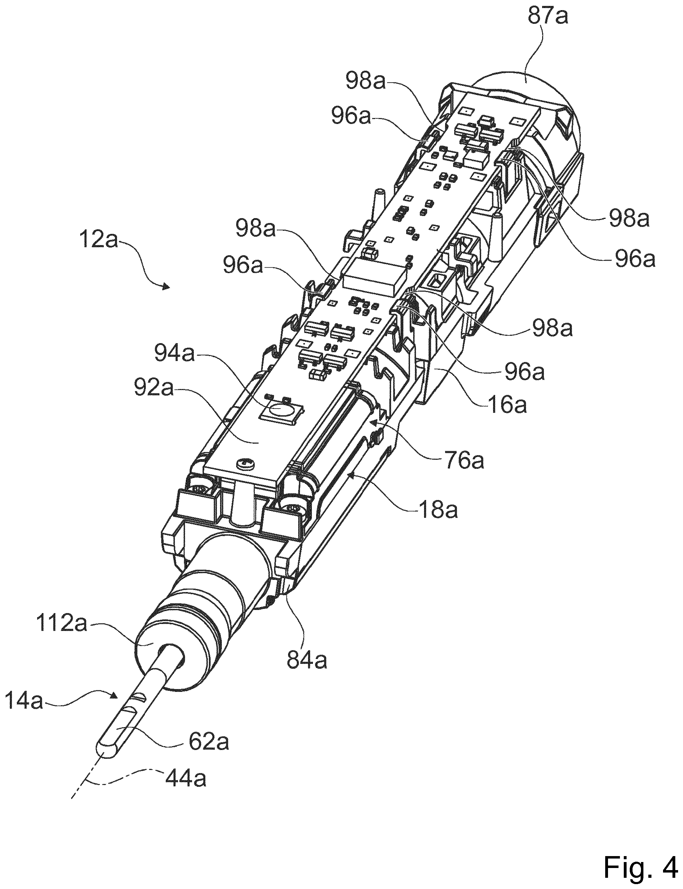

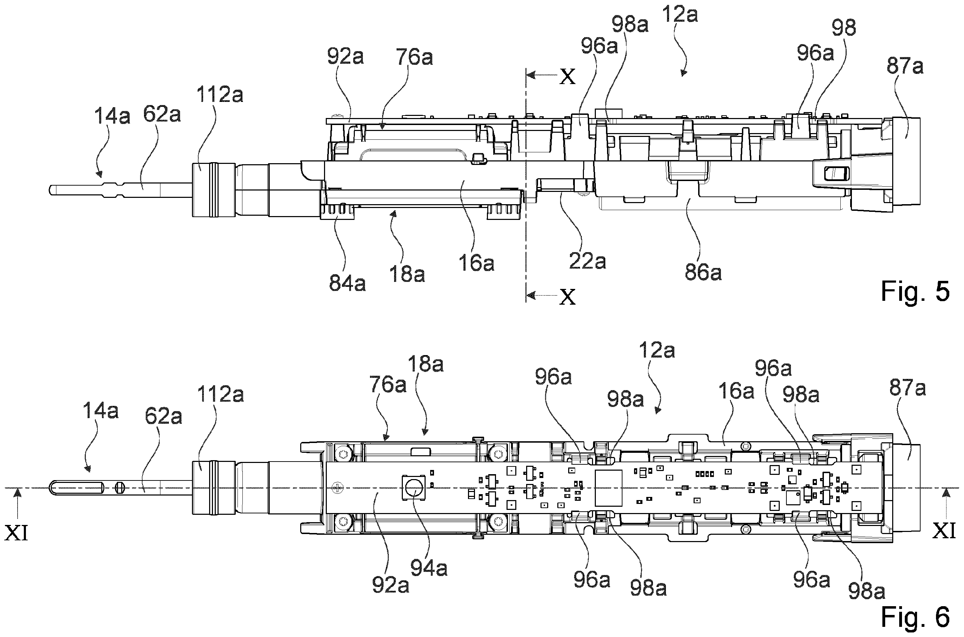

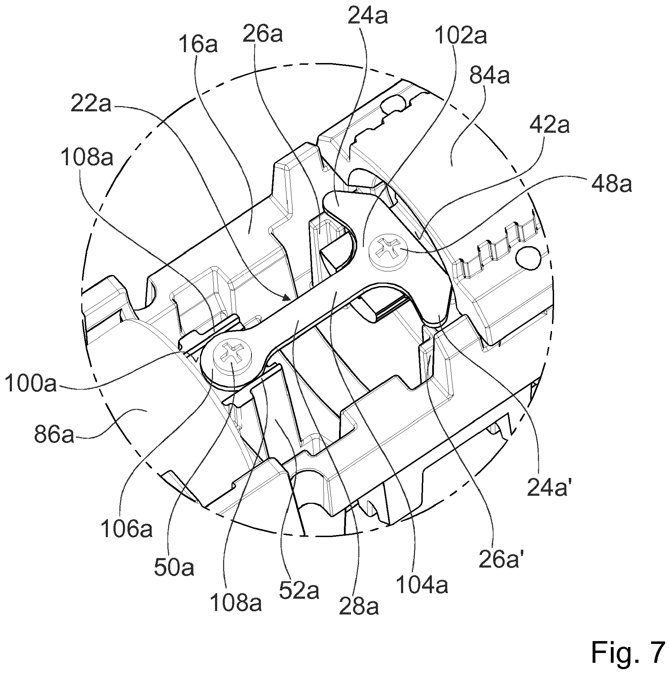

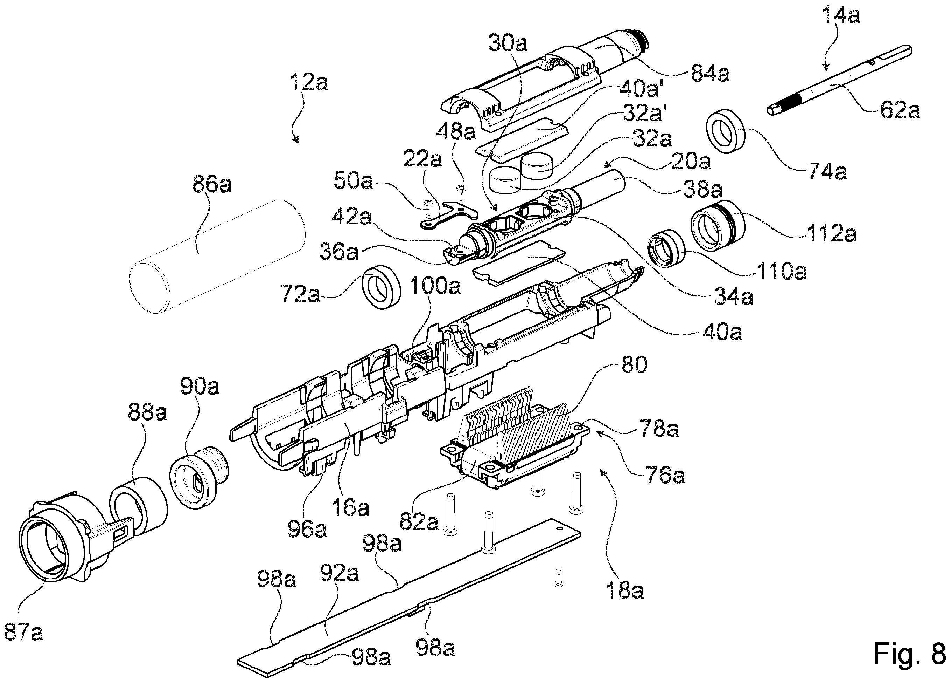

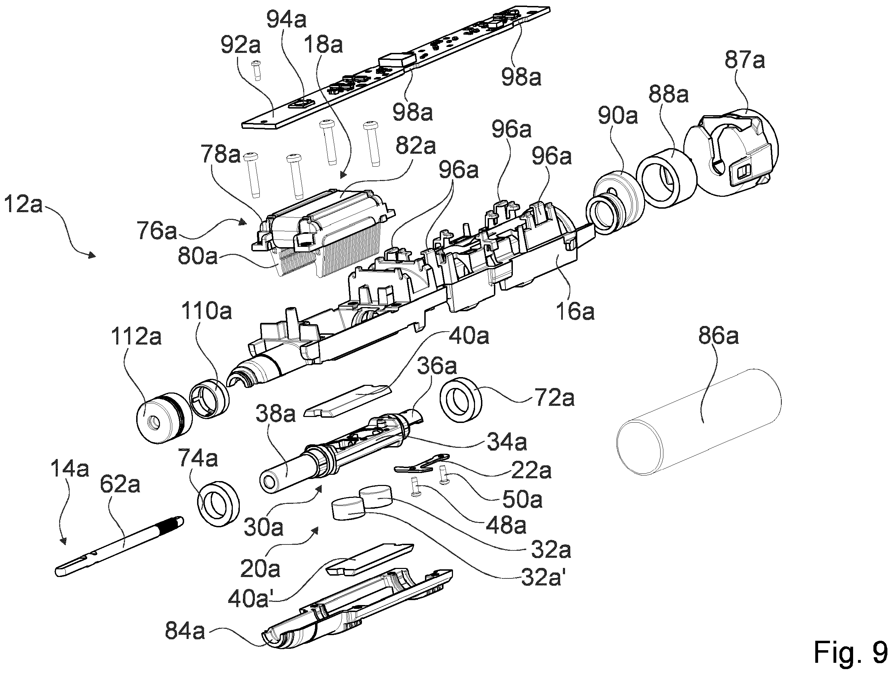

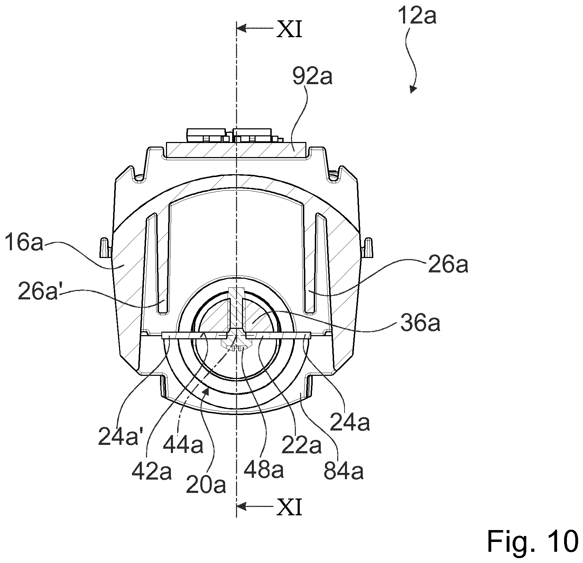

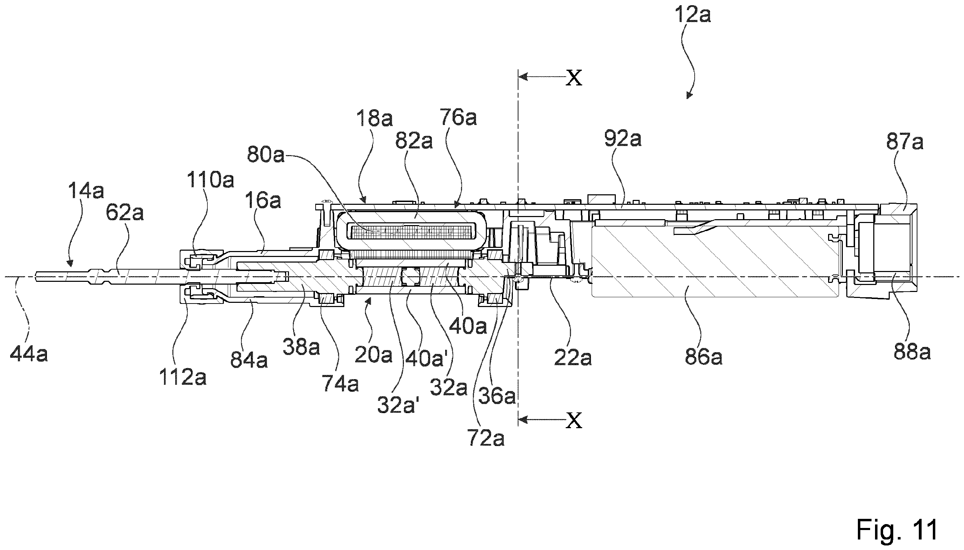

Im Folgenden wird auf die Figuren 3 bis 11 Bezug genommen, welche unterschiedliche Ansichten des Bürstenhandteils 12a zeigen, wobei das Gehäuse 64a und der Deckel 70a jeweils ausgeblendet sind. Aufgrund der unterschiedlichen Ansichten sind einige Elemente nicht in sämtlichen Figuren dargestellt und entsprechend nicht in sämtlichen Figuren mit Bezugszeichen versehen.

Ferner weist das Bürstenhandteil 12a eine in dem Gehäuse 64a angeordnete, feste Rahmeneinheit 16a auf. Ferner weist das Bürstenhandteil 12a eine in dem Gehäuse 64a angeordnete, zusätzliche Rahmeneinheit 87a einer Ladespule 88a auf. Die Rahmeneinheit 16a mit montierter Rahmeneinheit 87a der Ladespule 88a ist in einem montierten Zustand in das Gehäuse 64a eingeschoben. Die Rahmeneinheit 16a ist einstückig ausgebildet, während die Rahmeneinheit 87a der Ladespule 88a an diese montiert ist. Die Rahmeneinheit 16a mit montierter Rahmeneinheit 87a der Ladespule 88a erstreckt sich axial über einen Großteil des Gehäuses 64a. Die Rahmeneinheit 16a und die Rahmeneinheit 87a der Ladespule 88a ist von einem Kunststoffrahmen gebildet. Die Rahmeneinheit 16a und Rahmeneinheit 87a der Ladespule 88a bestehen aus Kunststoff, vorzugsweise einem Polypropylen. Grundsätzlich wäre jedoch auch eine andere, einem Fachmann als sinnvoll erscheinende Ausgestaltung der Rahmeneinheit 16a und/oder der Rahmeneinheit 87a der Ladespule 88a denkbar. Die Rahmeneinheit 16a mit montierter Rahmeneinheit 87a der Ladespule 88a weist ferner verschiedene aneinandergereihte Geometrien für die Aufnahme von unterschiedlichen Bauteilen des Innenlebens des Bürstenhandteils 12a auf. Ferner weist die Rahmeneinheit 16a Durchbrüche und Schlitze für Kabel und zur Gewichtsreduktion auf.

Des Weiteren weist das Bürstenhandteil 12a eine in dem Gehäuse 64a aufgenommene Antriebseinheit 18a zu einem Antrieb der Schnittstelle 14a auf. Die Antriebseinheit 18a ist zu einem Antrieb der Achse 62a der Schnittstelle 14a vorgesehen. Die Antriebseinheit 18a ist von einem Motor gebildet. Die Antriebseinheit 18a ist von einem Schwingankermotor gebildet. Die Rahmeneinheit 16a nimmt die Antriebseinheit 18a zumindest teilweise auf. Die Rahmeneinheit 16a nimmt die Antriebseinheit 18a vollständig auf. Die Antriebseinheit 18a ist direkt in der Rahmeneinheit 16a montiert. Es existiert insbesondere keine eigentliche separate Motorenbaugruppe. Die Antriebseinheit 18a weist einen Rotor 20a auf. Der Rotor 20a ist zu einer Durchführung einer oszillierenden Bewegung vorgesehen. Der Rotor 20a weist ein einstückig ausgeführtes Käfigelement 30a auf. Das Käfigelement 30a ist zu einer Aufnahme von zumindest einem Magneten 32a, 32a' vorgesehen. Das Käfigelement 30a ist zu einer Aufnahme von zwei Magneten 32a, 32a' vorgesehen. Die Magneten 32a, 32a' sind jeweils von Permanentmagneten gebildet. Das Käfigelement 30a weist zu einer Aufnahme der Magneten 32a, 32a' jeweils einen Aufnahmebereich auf. Ferner weist das Käfigelement 30a einen den zumindest einen Aufnahmebereich umfassenden Grundkörper 34a und auf beiden Seiten des Grundkörpers 34a angeordnete Achsfortsätze 36a, 38a auf, die eine Rotationsachse 44a des Rotors 20a ausbilden. Die Achsfortsätze 36a, 38a sind jeweils auf gegenüberliegenden Seiten des Grundkörpers 34a angeordnet. Ein erster Achsfortsatz 36a ist auf einer der Schnittstelle 14a abgewandten Seite des Grundkörpers 34a angeordnet. Ein zweiter Achsfortsatz 38a ist auf einer der Schnittstelle 14a zugewandten Seite des Grundkörpers 34a angeordnet. Der zweite Achsfortsatz 38a ist direkt mit der Schnittstelle 14a gekoppelt. Der zweite Achsfortsatz 38a ist zu einer drehfesten Aufnahme der Achse 62a der Schnittstelle 14a vorgesehen. Eine Aufnahme der Achse 62a kann dabei beispielsweise über einen Presssitz, durch Verkleben oder durch Verschweißen erreicht werden. Ferner weist der Rotor 20a zumindest eine Abdeckung 40a, 40a' auf, welche zu einer Verschließung der Aufnahmebereiche des Käfigelements 30a vorgesehen ist. Der Rotor 20a weist zumindest zwei Abdeckungen 40a, 40a' auf, welche jeweils zu einer Verschließung einer Seite der Aufnahmebereiche des Käfigelements 30a vorgesehen sind und insbesondere gleichzeitig auch dazu dienen, das Magnetfeld zu lenken. Die Aufnahmebereiche sind jeweils zu zwei gegenüberliegenden Seiten hin geöffnet und werden nach einem Einsetzen der Magnete 32a, 32a' mittels der Abdeckungen 40a, 40a' verschlossen. Die Abdeckungen 40a, 40a' sind jeweils an den Grundkörper 34a des Käfigelements 30a angeschraubt, angeklebt oder verschraubt. Bei einer Montage wird vorzugsweise zuerst die erste Abdeckung 40a mit dem Grundkörper 34a verbunden, anschließend die Magnete 32a, 32a' eingesetzt und darauffolgend die zweite Abdeckung 40a' mit dem Grundkörper 34a verbunden. Anschließend erfolgt die Montage von Lagern 72a, 74a zur Lagerung des Rotors 20a. Der Rotor 20a ist über seine Lager 72a, 74a in einem Aufnahmebereich der Rahmeneinheit 16a aufgenommen. Die Lager 72a, 74a sind beispielsweise von Wälzlagern und/oder von Gleitlagern gebildet, welche jeweils mit einem Außenring in einer Lageraufnahme der Rahmeneinheit 16a und mit einem Innenring auf einem der Achsfortsätze 36a, 38a angeordnet sind. Der Aufnahmebereich für den Rotor 20a ist zu zwei gegenüberliegenden Seiten hin geöffnet. Die Abdeckungen 40a, 40a' sind dazu vorgesehen, die Magnete 32a, 32a' zu überdecken und ein Magnetfeld der Magnete 32a, 32a' zu verteilen.

Des Weiteren weist die Antriebseinheit 18a ein Rückstellelement 22a auf. Das Rückstellelement 22a ist plattenförmig ausgebildet. Das Rückstellelement 22a ist in einer Ruhestellung, daher in einer unverdrehten Stellung des Rotors 20a, eben ausgebildet. Die Materialdicke des Rückstellelements 22a beträgt von 0,2 mm bis 1 mm, vorzugsweise von 0,3 mm bis 0,7 mm. Das Rückstellelement 22a besteht zumindest teilweise aus einem Federstahl. Das Rückstellelement 22a besteht vollständig aus einem Federstahl. Ein Material des Rückstellelements 22a umfasst zumindest Kohlenstoff, Silizium, Mangan, Phosphor, Schwefel und Chrom. Ein Kohlenstoffanteil des Materials des Rückstellelements 22a beträgt von 0,7 % bis 1,3 %, vorzugsweise von 0,8 % bis 1,1 %. Ein Siliziumanteil des Materials des Rückstellelements 22a beträgt von 0,1 % bis 0,5 %, vorzugsweise von 0,15 % bis 0,4 %. Ein Mangananteil des Materials des Rückstellelements 22a beträgt von 0,2 % bis 0,8 %, vorzugsweise von 0,3 % bis 0,7 %. Ein Phosphoranteil des Materials des Rückstellelements 22a beträgt von 0,00 % bis 0,04 %, vorzugsweise von 0,00 % bis 0,03 %. Ein Schwefelanteil des Materials des Rückstellelements 22a beträgt von 0,00 % bis 0,04 %, vorzugsweise von 0,00 % bis 0,03 %. Ein Chromanteil des Materials des Rückstellelements 22a beträgt von 0 % bis 0,5 %, vorzugsweise von 0,00 % bis 0,4 %. Das Rückstellelement 22a besteht beispielhaft aus einem Federstahl nach deutscher Norm 1.1274 oder 1.1269.

Das Rückstellelement 22a ist mit einem ersten Ende drehfest mit dem Rotor 20a gekoppelt und mit einem zweiten Ende drehfest an der Rahmeneinheit 16a fixiert. Das Rückstellelement 22a ist mit dem ersten Ende drehfest mit dem ersten Achsfortsatz 36a des Rotors 20a gekoppelt. Das Rückstellelement 22a ist mit dem ersten Ende fest mit dem ersten Achsfortsatz 36a des Rotors 20a gekoppelt. Der Achsfortsatz 36a ist annähernd halbzylinderförmig ausgebildet, wobei eine Mittelachse des Grundzylinders annähernd der Rotationsachse 44a des Rotors 20a entspricht. Der Achsfortsatz 36a weist eine parallel zu der Rotationsachse 44a des Rotors 20a zugewandte Anlagefläche 42a zu einer Fixierung des ersten Endes des Rückstellelements 22a auf. Das Rückstellelement 22a ist dazu vorgesehen, in einem Bereich des ersten Endes mit einer Haupterstreckungsfläche an der Anlagefläche 42a anzuliegen. In einem montierten Zustand in einer Ausgangslage des Rotors 20a erstreckt sich eine Haupterstreckungsebene des Rückstellelements 22a parallel zu der Anlagefläche 42a. Ein kleinster Abstand zwischen der Anlagefläche 42a und der Rotationsachse 44a des Rotors 20a entspricht annähernd 50% der geringsten Dicke 46a des Rückstellelements 22a. Zudem ist die Anlagefläche 42a in einer Vertiefung angeordnet, welche dazu vorgesehen ist, das Rückstellelement 22a formschlüssig parallel zu der Anlagefläche 42a zu sichern. Die Vertiefung ist teilweise korrespondierend zu dem ersten Ende des Rückstellelements 22a ausgebildet. Ferner ist das Rückstellelement 22a mit dem zweiten Ende fest mit einem Fortsatz 52a der Rahmeneinheit 16a verbunden. Die Rahmeneinheit 16a weist den Fortsatz 52a mit einer erhöhten Befestigungsfläche 100a auf, auf welcher das Rückstellelement 22a fixiert ist. Die Befestigungsfläche 100a befindet sich auf einem freien Ende des Fortsatzes 52a der Rahmeneinheit 16a. Die Befestigungsfläche 100a ist von einer quadratischen Fläche gebildet. Die Befestigungsfläche 100a weist eine Größe von 8 mm² bis 30 mm², vorzugsweise von 12 mm² bis 20 mm², auf. Ferner ist die Befestigungsfläche 100a auf zwei Seiten durch erhöhte Wandungen 108a des Fortsatzes 52a begrenzt. Die Wandungen 108a dienen zu einer temporären Sicherung und Ausrichtung des Rückstellelements 22a. Ein minimaler Abstand zwischen den Wandungen 108a entspricht zumindest annähernd einer Quererstreckung des Rückstellelements 22a an dem zweiten Ende.

Das Rückstellelement 22a weist einen Grundkörper 28a mit einem ersten Befestigungsabschnitt 102a, einem Schaft 104a und einem zweiten Befestigungsabschnitt 106a auf. Der erste Befestigungsabschnitt 102a und der zweite Befestigungsabschnitt 106a sind an gegenüberliegenden Enden des Rückstellelements 22a angeordnet und über den Schaft 104a verbunden. Der erste Befestigungsabschnitt 102a und der zweite Befestigungsabschnitt 106a weisen jeweils eine zentrale Ausnehmung auf. Die zentralen Ausnehmungen sind jeweils von runden Löchern gebildet. Der erste Befestigungsabschnitt 102a ist an dem ersten Ende des Rückstellelements 22a angeordnet. Das Loch des ersten Befestigungsabschnitts 102a ist auf der Rotationsachse 44a des Rotors 20a angeordnet. Das Loch weist einen Durchmesser von 1 mm bis 2 mm, vorzugsweise von 1,3 mm bis 1.7 mm, auf. Der zweite Befestigungsabschnitt 106a ist an dem zweiten Ende des Rückstellelements 22a angeordnet. Der zweite Befestigungsabschnitt 106a ist mittig an einem freien Ende des Rückstellelements 22a angeordnet und umfasst das Loch. Das Loch ist auf der Rotationsachse 44a des Rotors 20a angeordnet. Das Loch weist einen Durchmesser von 1 mm bis 2 mm, vorzugsweise von 1,3 mm bis 1.7 mm, auf. Die Antriebseinheit 18a weist ein erstes, als Schraube ausgebildetes Befestigungsmittel 48a auf, welches dazu vorgesehen ist, das Rückstellelement 22a mit dem ersten Achsfortsatz 36a des Rotors 20a zu verbinden. Das als Schraube ausgebildete erste Befestigungsmittel 48a ist durch das Loch des ersten Befestigungsabschnitts 102a in eine Bohrung des ersten Achsfortsatzes 36a des Rotors 20a eingeschraubt. Die Antriebseinheit 18a weist ferner ein zweites, als Schraube ausgebildetes Befestigungsmittel 50a auf, welches dazu vorgesehen ist, das Rückstellelement 22a auf dem Fortsatz 52a der Rahmeneinheit 16a zu fixieren. Das als Schraube ausgebildete zweite Befestigungsmittel 50a ist durch das Loch des zweiten Befestigungsabschnitts 106a in eine Bohrung des Fortsatzes 52a der Rahmeneinheit 16a eingeschraubt.

Ferner weist das Rückstellelement 22a ein Anschlagsmittel 24a in Form eines Anschlagsfortsatzes auf, welcher in zumindest einer ersten Anschlagsposition des Rotors 20a dazu vorgesehen ist, an einem Anschlag 26a der Rahmeneinheit 16a anzuliegen. Das Anschlagmittel 24a ist dazu vorgesehen, eine oszillierende Bewegung des Rotors 20a in Richtung der ersten Anschlagsposition zu begrenzen. Das Anschlagmittel 24a ist von einem mechanischen Anschlag gebildet, mit welchem der Rotor 20a bei einer Bewegung bei Erreichen einer Endlage mechanisch an den Anschlag 26a der Rahmeneinheit 16a anschlägt. Der Anschlag 26a ist von einem Anschlagszylinder an der Rahmeneinheit 16a gebildet. Der Anschlag 26a ist dezentral in der Rahmeneinheit 16a angeordnet. Der Anschlag 26a weist beispielhaft eine T-förmige Querschnittsform auf. Der Anschlag 26a ist dabei so angeordnet, dass das Anschlagmittel 24a bei einer Verdrehung auf den Anschlag 26a trifft, wobei die Endfläche des Anschlags 26a auf eine Form der Endfläche des Anschlagmittels 24a angepasst ist. Vorzugsweise berührt das Anschlagmittel 24a den Anschlag 26a lediglich an einem Punkt auf der Fläche, es kann aber auch eine Berührungslinie sein. Ein minimaler Abstand zwischen dem Anschlagmittel 24a und dem Anschlag 26a in einer Ausgangslage des Rotors 20a beträgt von 0,5 mm bis 3 mm, vorzugsweise von 1 mm bis 2 mm. Die Endfläche des Anschlags 26a weist eine Fläche von 2 mm² bis 20 mm², vorzugsweise von 5 mm² bis 10 mm² auf.

Des Weiteren weist das Rückstellelement 22a ein weiteres Anschlagmittel 24a' in Form eines weiteren Anschlagsfortsatzes auf, welcher in zumindest einer zweiten Anschlagsposition des Rotors 20a dazu vorgesehen sind, an einem Anschlag 26a' der Rahmeneinheit 16a anzuliegen. Das weitere Anschlagmittel 24a' ist dazu vorgesehen, eine oszillierende Bewegung des Rotors 20a in Richtung der zweiten Anschlagsposition zu begrenzen. Das weitere Anschlagmittel 24a' ist von einem mechanischen Anschlag gebildet, mit welchem der Rotor 20a bei einer Bewegung bei Erreichen einer Endlage mechanisch an den Anschlag 26a' der Rahmeneinheit 16a anschlägt. Der Anschlag 26a' ist zu dem Anschlag 26a gegenüberliegend angeordnet. Der Anschlag 26a' ist auf einer der Rotationsachse 44a des Rotors 20a gegenüberliegenden Seite des Anschlags 26a angeordnet. Der Anschlag 26a' ist zu dem Anschlag 26a gespiegelt ausgebildet. Der Anschlag 26a' ist von einem Anschlagszylinder an der Rahmeneinheit 16a gebildet. Der Anschlag 26a' ist dezentral in der Rahmeneinheit 16a angeordnet. Der Anschlag 26a' weist beispielhaft eine T-förmige Querschnittsform auf. Der Anschlag 26a' ist dabei so angeordnet, dass das weitere Anschlagmittel 24a' bei einer Verdrehung auf den Anschlag 26' trifft, wobei die Endfläche des Anschlags 26a' auf eine Form der Endfläche des weiteren Anschlagmittels 24a' angepasst ist. Vorzugsweise berührt das Anschlagmittel 24a den Anschlag 26a lediglich an einem Punkt auf der Fläche, es kann aber auch eine Berührungslinie sein. Ein minimaler Abstand zwischen dem weiteren Anschlagmittel 24a' und dem Anschlag 26a in einer Ausgangslage des Rotors 20a beträgt von 0,5 mm bis 3 mm, vorzugsweise von 1 mm bis 2 mm. Die Endfläche des Anschlags 26a weist eine Fläche von 2 mm² bis 20 mm², vorzugsweise von 5 mm² bis 10 mm² auf.

Das Anschlagmittel 24a und das weitere Anschlagmittel 24a' erstrecken sich an dem ersten Ende des Rückstellelements 22a, auf gegenüberliegenden Seiten quer zu dem Grundkörper 28a des Rückstellelements 22a, von dem Grundkörper 28a des Rückstellelements 22a weg. Das Anschlagmittel 24a und das weitere Anschlagmittel 24a' erstrecken sich von dem ersten Befestigungsabschnitt 102a weg quer zu dem Grundkörper 28a des Rückstellelements 22a. Das eine Anschlagmittel 24a und das weitere Anschlagmittel 24a' sind jeweils entlang ihrer Haupterstreckungsrichtung gekrümmt ausgebildet. Das Anschlagmittel 24a und das weitere Anschlagmittel 24a' erstrecken sich jeweils senkrecht zu einer Haupterstreckungsrichtung des Rückstellelements 22a von einem Grundkörper 28a des Rückstellelements 22a weg, und krümmen sich in eine von dem Rotor 20a wegweisende Richtung. Das Rückstellelement 22a ist ankerförmig ausgebildet. Das erste Ende des Rückstellelements 22a ist an einem Kreuz der Ankerform ausgebildet. Der Schaft 104a des Rückstellelements 22a ist dabei von einem Schaft der Ankerform gebildet. Die Anschlagmittel 24a, 24a' sind von Armen mit Flunken der Ankerform gebildet. Der zweite Befestigungsabschnitt 106a ist von einem Roring der Ankerform gebildet. Der erste Befestigungsabschnitt 102a ist von einem Kreuz der Ankerform gebildet. Das Rückstellelement 22a weist die Form eines Ankers zumindest mit einem Roring, einem Schaft, einem Kreuz, und Armen mit Flunken auf. Gegenüber einem Anker ist das Rückstellelement 22a einstückig ausgebildet.

Das Rückstellelement 22a weist eine Länge von 12 mm bis 20 mm, vorzugsweise von 14 mm bis 18 mm, auf. Entlang der Mittelachse weist das Rückstellelement 22a den ersten Befestigungsabschnitt 102a, den Schaft 104a und den zweiten Befestigungsabschnitt 106a auf. Der Schaft 104a weist dabei eine Länge von 3 mm bis 10 mm, vorzugsweise von 5 mm bis 8 mm auf und ist mittig zwischen dem ersten und zweiten Befestigungsabschnitt 102a, 106a angeordnet. Der erste Befestigungsabschnitt 102a und der zweite Befestigungsabschnitt 106a sind jeweils auf gegenüberliegenden Seiten des Schafts 104a angeordnet und teilen den Rest der Länge gleich auf. Das Rückstellelement 22a weist über die Anschlagmittel 24a, 24a' eine Breite von 7 mm bis 15 mm, vorzugsweise von 10 mm bis 14 mm, auf. Am Schaft 104a weist das Rückstellelement 22a eine Breite von 1 mm bis 4 mm, vorzugsweise von 1,5 mm bis 3 mm, auf. Der zweite Befestigungsabschnitt 106a weist eine Breite von 2 mm bis 8 mm, vorzugsweise von 3 mm bis 5 mm, auf. Alle Übergänge des Rückstellelements 22a sind stetig und gerundet. Ferner ist das Rückstellelement 22a gratfrei und weist glatte Flächen auf. Ferner sind die freien Enden der Anschlagmittel 24a, 24a' gerundet. Des Weiteren ist ein Übergang von dem Grundkörper 28a zu den Anschlagmitteln 24a, 24a' gerundet, wobei ein Radius von 0,5 mm bis 5 mm, vorzugsweise von 1,5 mm bis 2,5 mm, beträgt. Zudem ist ein Übergang von dem Schaft 104a zu dem zweiten Befestigungsabschnitt 106a, in welchem das Rückstellelement 22a mit der Rahmeneinheit 16a verbunden ist, gerundet, wobei ein Radius von 0,5 mm bis 5 mm, vorzugsweise von 1,5 mm bis 2,5 mm, beträgt. Es sind alle Kanten im Querschnitt gerundet, wobei ein Rundungsradius von 0,1 mm bis 0,7 mm, vorzugsweise von 0,15 mm bis 0,35 mm beträgt.

Das Anschlagmittel 24a und das weitere Anschlagmittel 24a' sind dazu vorgesehen, eine Verdrehung des Rotors 20a auf einen Rotationswinkel von 2° bis 12°, vorzugsweise von 6° bis 10° und besonders bevorzugt von 7° bis 8°, zu begrenzen. Bei einer Verdrehung des Rückstellelements 22a durch den Rotor 20a wird der erste Befestigungsabschnitt 102a gegenüber dem zweiten Befestigungsabschnitt 106a durch Torsion des Rückstellelements 22a verdreht.

Zudem weist die Antriebseinheit 18a einen Stator 76a auf. Der Stator 76a umfasst einen einstückig ausgeführten Träger 78a, ein in den Träger 78a eingesetztes Blechpaket 80a und eine das Blechpaket 80a umgreifende Spule 82a. Der Stator 76a umfasst den einstückig ausgeführten Träger 78a aus einer Hartkomponente, das in den Träger 78a eingesetzte Blechpaket 80a, die das Blechpaket 80a umgreifende Spule 82a sowie eine zwischen der Spule 82a und dem Blechpaket 80a angeordnete Leitblechabdeckung. Der Stator 76a ist als ein Modul ausgebildet. Der Träger 78a ist von einem Kunststoffträger gebildet. Der Träger 78a ist von einem im Wesentlichen quaderförmigen Träger gebildet, welcher auf einer ersten Seite eine quaderförmige Ausnehmung zu einer Aufnahme des Blechpakets 80a aufweist. Das Blechpaket 80a weist einen U-förmigen Querschnitt auf, wobei die freien Enden des Blechpakets 80a jeweils von dem Träger wegweisen. Das Blechpaket 80a besteht aus einer Vielzahl von dicht an dicht gepackten Leitblechen. Die Leitbleche sind insbesondere in den Trägern 78a eingeklebt, eingepresst, eingerastet oder sonstwie verbunden. Ferner weist der Träger 78a auf einer Rückseite der Ausnehmungen eine Führungsnut zu einer Aufnahme der Spule 82a auf. Die Spule 82a umschließt den Träger 78a und das Blechpaket 80a. Die Spule 82a ist um das Blechpaket 80a und den Träger 78a gewickelt. Die Spule 82a ist in Längsrichtung orientiert. Die Spule 82a und das Blechpaket 80a sind kontaktlos ausgeführt. Zu einer Isolierung der Spule 82a gegenüber dem Blechpaket 80a auf einer dem Träger 78a abgewandten Seite weist der Stator 76a ein nicht weiter sichtbares Isolationsplättchen auf, welches zwischen der Spule 82a und dem Blechpaket 80a angeordnet ist. Das Isolationsplättchen ist von einer Leitblechabdeckung gebildet. Das Isolationsplättchen besteht aus Kunststoff. Eine Montage der Leitblechabdeckung erfolgt mittels Einrasten, Kleben oder Ähnlichem. Das Isolationsplättchen schützt den Draht der Spule 82a vor den Kanten des Blechpakets 80a und verhindert einen Kurzschluss zwischen der Spule 82a und dem Blechpaket 80a. Der Träger 78a der Antriebseinheit 18a ist direkt mit der Rahmeneinheit 16a verbunden. Der Träger 78a ist mit der Rahmeneinheit 16a verschraubt. Grundsätzlich wäre jedoch auch eine andere, einem Fachmann als sinnvoll erscheinende Verbindung denkbar. Der Träger 78a deckt den Rotor 20a der Antriebseinheit 18a von einer Seite ab. Der Träger 78a verdeckt eine erste geöffnete Seite des Aufnahmebereichs der Rahmeneinheit 16a für den Rotor 20a. Ferner ragt das Blechpaket 80a teilweise in den Aufnahmebereich des Rotors 20a auf. Das Blechpaket 80a umgreift den Rotor 20a in einem montierten Zustand zumindest teilweise.

Ferner weist das elektrische Bürstenhandteil 12a eine Rotorabdeckung 84a auf. Die Rotorabdeckung 84a deckt den Rotor 20a der Antriebseinheit 18a von einer dem Träger 78a gegenüberliegenden Seite ab. Die Rotorabdeckung 84a verdeckt eine zweite geöffnete Seite des Aufnahmebereichs der Rahmeneinheit 16a für den Rotor 20a. Der Rotor 20a ist in einem montierten Zustand direkt von dem Stator 76a, der Rahmeneinheit 16a und der Rotorabdeckung 84a umgeben. Die Rotorabdeckung 84a ist von einem Kunststoffteil gebildet. Die Rotorabdeckung 84a ist fest mit der Rahmeneinheit 16a verbunden. Die Rotorabdeckung 84a ist gegenüber dem Träger 78a mit der Rahmeneinheit 16a verbunden. Die Rotorabdeckung 84a ist mit der Rahmeneinheit 16a verschraubt. Grundsätzlich wäre jedoch auch eine andere, einem Fachmann als sinnvoll erscheinende Art der Verbindung denkbar. Die Rotorabdeckung 84a ist zusammen mit der Rahmeneinheit 16a zu einer Lagerung und Fixierung des Rotors 20a der Antriebseinheit 18a vorgesehen. Die Rotorabdeckung 84a und die Rahmeneinheit 16a bilden jeweils zwei halbkreisförmige Achsaufnahmen zu einer Aufnahme des Rotors 20a aus. Die halbkreisförmigen Achsaufnahmen sind jeweils von korrespondierenden Achsaufnahmen gebildet, welche gemeinsam eine vollständige Achsaufnahme ausbilden. Die Achsaufnahmen sind jeweils zu einer Aufnahme der beiden Achsfortsätze 36a, 38a des Rotors 20a über jeweils ein Lager 72a, 74a vorgesehen. In den Achsaufnahmen sind dazu die Lager 72a, 74a aufgenommen, welche wiederum zu einer Lagerung der Achsfortsätze 36a, 38a des Rotors 20a gegenüber der Rahmeneinheit 16a vorgesehen sind. Es sind verschiedene, einem Fachmann als sinnvoll erscheinende Ausgestaltungen der Lager 72a, 74a denkbar. Der Rotor 20a ist zwischen der Rahmeneinheit 16a und der Rotorabdeckung 84a gelagert. Die Rotorabdeckung 84a ist zusammen mit der Rahmeneinheit 16a zudem zu einer Lagerung und Abdichtung der Achse 62a der Schnittstelle 14a vorgesehen. Die Rotorabdeckung 84a und die Rahmeneinheit 16a bilden dazu jeweils eine halbkreisförmige Achsaufnahme zu einer Aufnahme eines Montagerings 110a und einer Dichtungskappe 112a aus. Die Achse 62a ist zwischen der Rotorabdeckung 84a und der Rahmeneinheit 16a gelagert. Die Rotorabdeckung 84a erstreckt sich daher axial von der Antriebseinheit 18a bis zu einem Achsaustritt der Schnittstelle 14a aus dem Gehäuse 64a.

Des Weiteren weist das elektrische Bürstenhandteil 12a den Montagering 110a und die Dichtungskappe 112a auf, welche zu einer Verbindung der Rotorabdeckung 84a und der Rahmeneinheit 16a zueinander vorgesehen sind. Der Montagering 110a ist dazu vorgesehen, über ein achsseitiges Ende der Rotorabdeckung 84a und der Rahmeneinheit 16a geschoben zu werden. Der Montagering 110a umgreift in einem montierten Zustand jeweils das achsseitige Ende der Rotorabdeckung 84a und der Rahmeneinheit 16a. Der Montagering 110a dient zudem zu einer Zentrierung der Rotorabdeckung 84a und der Rahmeneinheit 16a. Ferner dient der Montagering 110a zu einer Achsführung der Achse 62a der Schnittstelle 14a. Die Achse 62a ist durch den Montagering 110a hindurchgeführt. Der Montagering 110a besteht vorzugsweise aus einer Hartkomponente. Der Montagering 110a hat neben der Verbindungsfunktion zudem eine Stützfunktion für die Dichtungskappe 112a. Die Dichtungskappe 112a ist dazu vorgesehen, mit der Rahmeneinheit 16a und der Rotorabdeckung 84a zu verrasten. Die Dichtungskappe 112a weist auf einer Innenseite einen umlaufenden Rastfortsatz auf, welcher dazu vorgesehen ist, in eine umlaufende Rastnut der Rahmeneinheit 16a und der Rotorabdeckung 84a einzurasten. Die Dichtungskappe 112a ist im Wesentlichen hohlzylindrisch ausgebildet, wobei eine Grundseite teilweise geschlossen ist. Ferner dient die Dichtungskappe 112a zu einer Abdichtung eines Gehäuseinneren gegenüber der Schnittstelle 14a. Die Dichtungskappe 112a liegt dazu mit Übermaß an der Achse 62a an, sodass die Dichtungskappe 112a bei einer Drehbewegung der Achse 62a zumindest teilweise tordiert. Die Dichtungskappe 112a besteht aus einem Elastomer. Ferner dient die Dichtungskappe 112a zu einer Abdichtung zwischen dem Gehäuse 64a und der Rahmeneinheit 16a. In diesem Bereich stützt der Montagering 110a die Dichtungskappe 112a auf der Mantelfläche.

Des Weiteren weist das Bürstenhandteil 12a einen in dem Gehäuse 64a aufgenommenen Energiespeicher 86a zu einer Versorgung der Antriebseinheit 18a mit Energie auf. Die Rahmeneinheit 16a nimmt den Energiespeicher 86a auf. Der Energiespeicher 86a ist auf einer der Schnittstelle 14a abgewandten Seite der Antriebseinheit 18a angeordnet. Der Energiespeicher 86a wird radial durch seitliche Haltearme der Rahmeneinheit 16a verklemmt. Ferner wird eine Längsverschiebung des Energiespeichers 86a durch den kammerartigen Aufbau der Rahmeneinheit 16a vermieden. Der Energiespeicher 86a ist im Wesentlichen koaxial zu der Antriebseinheit 18a angeordnet. Der Energiespeicher 86a ist von einem Akkumulator, insbesondere einem NiMh-Akkumulator und/oder einem Li-Ion- Akkumulator, gebildet. Grundsätzlich wäre jedoch auch eine andere, einem Fachmann als sinnvoll erscheinende Ausgestaltung des Energiespeichers 86a denkbar, wie beispielsweise als Batterie. Es sind beispielhaft zwei verschiedene Energiespeicher 86a vorgesehen, welche zu dem Bürstenhandteil 12a verwendet werden. Ein erster vorgeschlagener Energiespeicher 86a, wie er in den Figuren dargestellt ist, ist von einer einzelnen Energiespeicherzelle gebildet. Der erste vorgeschlagene Energiespeicher 86a ist von einer AA-Energiespeicherzelle gebildet. Grundsätzlich wäre jedoch auch denkbar, dass der Energiespeicher von drei Energiespeicherzellen gebildet ist, die mittels eines Rahmens des Energiespeichers verbunden sind. Die Rahmeneinheit 16a ist, mit leichten Anpassungen, zu einer Aufnahme beider Energiespeicher 86a geeignet. Die Rahmeneinheit 16a ist sowohl zu einer Aufnahme einer einzelnen AA-Energiespeicherzelle, als auch zu einer Aufnahme von drei AAA-Energiespeicherzellen in dem Rahmen vorgesehen. Der Rahmen ist dazu vorgesehen, die drei Energiespeicherzellen in Serie zu verschalten. Die Serien-Schaltung wird durch Bleche erreicht, welche die Kontaktstellen zu den Energiespeicherzellen darstellen. Eine axiale Erstreckung des Rahmens entspricht einer axialen Erstreckung der einzelnen AA-Energiespeicherzellen. Ferner wird eine Längsverschiebung des Energiespeichers 86a durch die Montage der Rahmeneinheit 87a der Ladespule 88a im Zusammenspiel mit der Ladespule 88a und einem Ausgleichselement 90a vermieden.

Das elektrische Bürstenhandteil 12a weist ferner die Ladespule 88a zu einem Aufladen des Energiespeichers 86a auf. Grundsätzlich wäre jedoch auch eine Aufladung des Energiespeichers 86a direkt mittels Steckverbindung denkbar. Die Ladespule 88a ist von einer Induktionsspule gebildet.

Die Ladespule 88a ist in der festen Rahmeneinheit 87a der Ladespule 88a aufgenommen und mittels dieser an der Rahmeneinheit 16a fixiert. Die Rahmeneinheit 87a der Ladespule 88a weist einen Aufnahmebereich zu einer positionsfesten Aufnahme der Ladespule 88a auf. Die Ladespule 88a wird von der Rahmeneinheit 87a der Ladespule 88a von außen gehalten und mittels des Ausgleichselements 90a in Längsposition gehalten. Die Position der Ladespule 88a wird so sowohl radial als auch axial gesichert. Eine Montage der Ladespule 88a erfolgt insbesondere entlang der Längsachse. Die Rahmeneinheit 87a der Ladespule 88a ist mittels zweier Rastbügel mit zwei Rastnasen der Rahmeneinheit 16a verrastet und verliersicher gehalten. Das Ausgleichselement 90a ist zwischen der Ladespule 88a und dem Energiespeicher 86a angeordnet und ist dazu vorgesehen, die Ladespule 88a relativ zu dem Energiespeicher 86a zu positionieren. Die Ladespule 88a ist auf einer der Antriebseinheit 18a abgewandten Seite des Energiespeichers 86a angeordnet. Die Ladespule 88a ist im Wesentlichen koaxial zu dem Energiespeicher 86a und der Antriebseinheit 18a angeordnet. Der Deckel 70a greift ferner in einem montierten Zustand in die Ladespule 88a ein, um zu ermöglichen, dass ein Ferritkern eines Ladegeräts in der Ladespule 88a platziert werden kann. Die Ladespule 88a weist insbesondere einen Innendurchmesser von 6 mm bis 14 mm, vorzugsweise von 8 mm bis 15 mm, und einen Außendurchmesser von 12 mm bis 19mm, vorzugsweise von 14 mm bis 17 mm, auf. Ferner weist die Ladespule 88a insbesondere eine Höhe von 4 mm bis 15 mm, vorzugsweise von 5 mm bis 10 mm, auf.

Ferner weist das elektrische Bürstenhandteil 12a eine Leiterplatte 92a auf. Die Leiterplatte 92a ist zu einer Steuerung der Antriebseinheit 18a vorgesehen. Die Leiterplatte 92a ist in einem Betrieb zu einer Sinus-Ansteuerung der Antriebseinheit 18a vorgesehen. Die Leiterplatte 92a ist dazu mit dem Energiespeicher 86a gekoppelt. Der Energiespeicher 86a ist mit Leitungen über die Leiterplatte 92a, auf welcher die Steuerung integriert ist, mit der eigentlichen Antriebseinheit 18a verbunden. Der Energiespeicher 86a ist mit der Spule 82a verbunden, welche um das Blechpaket 80a gewickelt ist, wobei die Spule 82a nicht direkt auf dem Blechpaket 80a aufliegt, sondern einerseits am Träger 78a und andererseits an der Leitblechabdeckung aufliegt. In der Spule 82a wird ein Wechselstrom erzeugt, welcher dafür sorgt, dass sich an den freien Enden des Blechpakets 80a eine alternierende Polarisierung ausbildet. Im Rotor 20a sind die Magnete 32a, 32a' fest angeordnet und mittels der Abdeckungen 40a, 40a' montiert, die das von den Magneten 32a, 32a' ausgebildete Feld optimieren. Der Rotor 20a ist innerhalb des Blechpakets 80a drehbar gelagert. Durch die Polarisierung der freien Enden des Blechpakets 80a will sich der Rotor 20a mit den Magneten 32a, 32a' im Feld neu ausrichten, wodurch eine Bewegung entsteht. Werden die Enden des Blechpakets 80a umpolarisiert, so will sich der Rotor 20a in die andere Richtung ausrichten. Dadurch entsteht eine oszillierende Hin- und Her-Bewegung des Rotors 20a. Das Rückstellelement 22a auf der Rotationsachse 44a stellt die Rückführung des Rotors 20a in eine Nullposition sicher, des Weiteren sorgt sie für sanftere Bewegungsübergänge, wenn die Polarisierung wechselt. Insgesamt ist das Rückstellelement 22a notwendig, damit die Bewegungen überhaupt möglich sind, da die Kräfte durch die Polarisierung ansonsten so groß wären, dass keine Oszillation möglich wäre.

Was mittels der Leiterplatte 92a gesteuert wird, sind die Energie-Pulse, die der Antriebseinheit 18a zugeführt werden. Diese Größen sind spezifisch auf den vorliegenden Antrieb bzw. das Produkt angepasst. Damit ein ruhiger Lauf der Antriebseinheit 18a mit optimiertem Energiebedarf erreicht wird, wird die Antriebseinheit 18a sinusförmig angesteuert und nicht mit einem Rechteckssignal.

Ferner ist die Leiterplatte 92a mit der Ladespule 88a gekoppelt. Die Leiterplatte 92a ist zu einer Steuerung eines Ladevorgangs des Energiespeichers 86a vorgesehen. Des Weiteren weist die Leiterplatte 92a ein sich durch den Grundkörper 66a des Gehäuses 64a hindurch betätigbares Betätigungselement 94a auf, welches zu einer Aktivierung und/oder Deaktivierung des Bürstenhandteils 12a dient. Das Betätigungselement 94a ist dazu vorgesehen, durch die Umspritzung 68a des Gehäuses 64a hindurch betätigt zu werden. Ferner sind auf der Leiterplatte 92a weitere Elemente vorgesehen, wie insbesondere Leitungen, Widerstände, LEDs und/oder eine Steuereinheit. Die Leiterplatte 92a ist ferner teilweise formschlüssig durch die Rahmeneinheit 16a aufgenommen und erstreckt sich über einen Großteil einer axialen Erstreckung der Rahmeneinheit 16a. Die Leiterplatte 92a erstreckt sich zumindest über den Energiespeicher 86a und die Antriebseinheit 18a des Bürstenhandteils 12a. Zu einer formschlüssigen Aufnahme der Leiterplatte 92a weist die Rahmeneinheit 16a mehrere hakenförmige Formschlusselemente 96a auf, welche dazu vorgesehen sind, die Leiterplatte 92a in einem montierten Zustand teilweise zu übergreifen. Die Leiterplatte 92a weist für eine Montage an einer Außenkante zu den Formschlusselementen 96a korrespondierende Ausnehmungen 98a auf, über welche die Leiterplatte 92a zu einer Montage an den Formschlusselementen 96a vorbei in eine Endlage bewegt werden kann. Vorzugsweise wird die Leiterplatte 92a bei einer Montage zu einer Endlage versetzt auf die Rahmeneinheit 16a aufgesetzt, wobei die Leiterplatte 92a mittels der Ausnehmungen 98a an den Formschlusselementen 96a vorbeigeführt werden kann. Anschließend wird die Leiterplatte 92a unter die Formschlusselemente 96a geschoben und dadurch fixiert. Die Leiterplatte 92a weist dazu nicht weiter sichtbare separate kleine Aussparungen zum Einrasten in der Endposition auf. Zusätzlich dienen die Formschlusselemente 96a als Niederhalter, welche die Leiterplatte 92a kraftschlüssig halten. An einem unteren Ende der Leiterplatte 92a weist die Rahmeneinheit 16a zudem einen Anschlag mit Rampe auf, welcher zu einer exakten Positionierung der Leiterplatte 92a dient.

Toleranzen zwischen der Rahmeneinheit 16a und ihren Bauteilen und dem Gehäuse 64a müssen aufgefangen werden, damit einerseits das Betätigungselement 94a im montierten Zustand an der korrekten Position für die Betätigung durch das Gehäuse 64a hindurch ist und andererseits aber auch die Ladespule 88a optimal liegt, damit der induktive Ladevorgang einen optimalen Wirkungsgrad erreicht. Weiter müssen Toleranzen aufgefangen werden, damit die Rahmeneinheit 16a satt im Gehäuse 64a sitzt und im Betrieb keine Geräusche entstehen. Der Längenausgleich zum Auffangen von Toleranzen kann durch die Einlage des teilweise komprimierbaren Ausgleichselements 90a erreicht werden. Weiter könnten aber auch elastische Elemente an der Rahmeneinheit 16a integriert sein, um den Längenausgleich sicherzustellen. Beispielsweise biegbare Elemente, die beim Montieren des Deckels 70a gespannt, d.h. verbogen werden.

Insgesamt kann die Rahmeneinheit 16a in mehrere Zonen unterteilt werden. Die Rahmeneinheit 16a weist eine Spulenzone auf. Die Spulenzone bildet von unten her gesehen die erste Zone und dient zu einer direkten Aufnahme und Montage der Ladespule 88a. Ferner weist die Rahmeneinheit 16a eine Akkuzone auf. Die Akkuzone schließt direkt an die Spulenzone an und ist zu einer Aufnahme des Energiespeichers 86a vorgesehen. Des Weiteren weist die Rahmeneinheit 16a eine Federzone auf. Die Federzone schließt auf einer der Spulenzone abgewandten Seite direkt an die Akkuzone an und ist zu einer Aufnahme des Rückstellelements 22a vorgesehen. Zudem weist die Rahmeneinheit 16a eine Schwingankerzone auf. Die Schwingankerzone schließt auf einer der Spulenzone abgewandten Seite direkt an die Federzone an und ist zu einer Aufnahme der Antriebseinheit 18a vorgesehen. Die Rahmeneinheit 16a ist im Bereich der Schwingankerzone durchgängig geöffnet. Zudem weist die Rahmeneinheit 16a eine Achszone auf. Die Achszone schließt auf einer der Spulenzone abgewandten Seite direkt an die Schwingankerzone an und ist zu einer Aufnahme der Schnittstelle 14a bzw. der Achse 62a der Schnittstelle 14a vorgesehen. Des Weiteren weist die Rahmeneinheit 16a eine Print-Zone auf. Die Print-Zone ist auf einer Vorderseite der Rahmeneinheit 16a angeordnet und ist zu einer Aufnahme der Leiterplatte 92a vorgesehen.

Die Herstellung des elektrischen Bürstenhandteils 12a erfolgt durch eine Bestückung der Rahmeneinheit 16a und das Einbringen der Rahmeneinheit 16a in das Gehäuse 64a. Eine Bestückung der Rahmeneinheit 16a erfolgt im Wesentlichen über eine Rückseite. Von vorne werden lediglich die Leiterplatte 92a und der Stator 76a montiert. Ferner werden entlang der Längsachse die Ladespule 88a und eine Verbindungskappe montiert. Die Antriebseinheit 18a und der Energiespeicher 86a werden von einer Rückseite der Rahmeneinheit 16a her montiert. Bei einer Montage des elektrischen Bürstenhandteils 12a wird vorzugsweise in einem ersten Schritt das gesamte Innenleben über die Rahmeneinheit 16a montiert. Dabei erfolgt eine Montage des Rückstellelements 22a. Eine Montage des Rückstellelements 22a an der Rahmeneinheit 16a erfolgt vollständig von einer Seite. Die Montage erfolgt dabei durch die Befestigung der zwei als Schrauben ausgebildeten Befestigungsmittel 48a, 50a. Die Ausrichtung des Rotors 20a erfolgt dabei selbsttätig durch die Bohrungen und Flächen sowie durch das ebene Rückstellelement 22a selbst. Die Anlagefläche 42a am Rotor 20a und an der Befestigungsfläche 100a des Fortsatzes 52a der Rahmeneinheit 16a werden durch das Rückstellelement 22a zueinander ausgerichtet für eine Ausgangsstellung. Anschließend wird in einem weiteren Schritt die Rahmeneinheit 16a in das Gehäuse 64a eingeschoben. Die Rahmeneinheit 16a wird dabei im Gehäuse 64a verklemmt. Die Rahmeneinheit 16a weist dazu Rastnasen auf, welche in Rastausnehmungen des Gehäuses 64a eingreifen. Darauffolgend wird in einem dritten Schritt der Deckel 70a an dem Gehäuse 64a fixiert und verschließt damit das Innenleben. Der Deckel 70a kann sowohl mit dem Gehäuse 64a verschraubt als auch beispielsweise mittels eines Bajonettverschlusses verriegelt werden.

Eine Herstellung des Rückstellelements 22a erfolgt aus einem Stahlblech. Das Stahlblech ist dabei längsgewalzt. Zu einer Herstellung erfolgt in einem ersten Schritt ein Stanzen der Kontur und/oder der Löcher des Rückstellelements 22a. Grundsätzlich wäre jedoch auch denkbar, dass die Löcher gebohrt werden. Anschließend erfolgt insbesondere ein Entgraten und Verrunden des Rückstellelements 22a, dies kann beispielsweise mittels Gleitschleifen, insbesondere Trowalisieren, erfolgen.

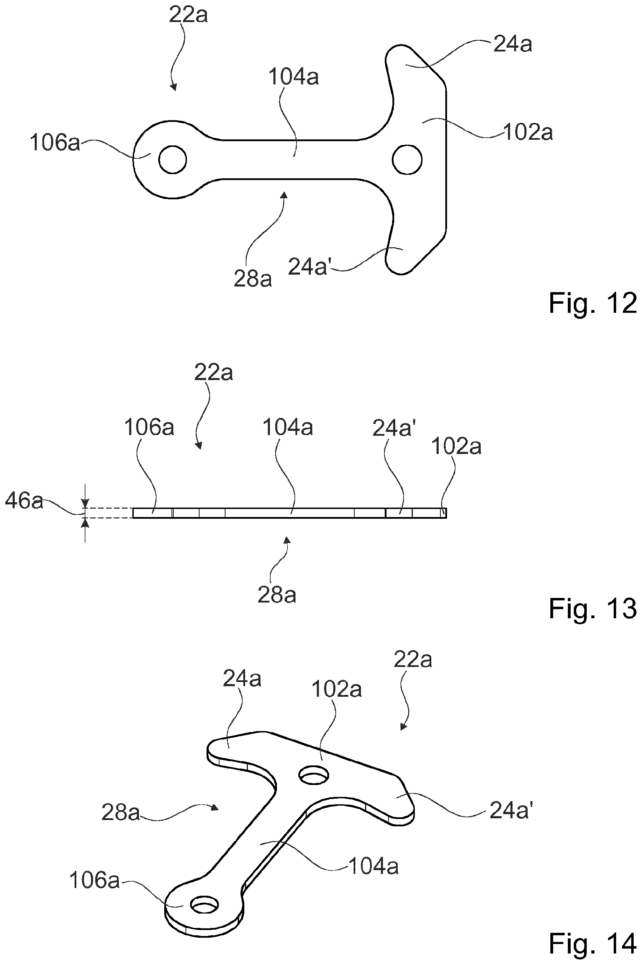

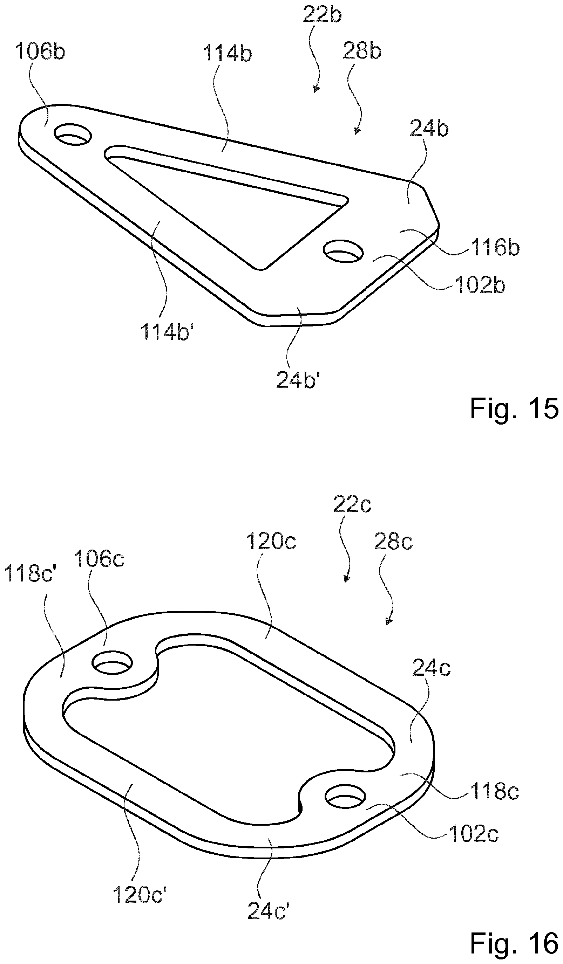

In den Figuren 15 und 16 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 14, verwiesen werden kann. Zur Unterscheidung der Ausführungsbeispiele ist der Buchstabe a in den Bezugszeichen des Ausführungsbeispiels der Figuren 1 bis 14 durch die Buchstaben b und c in den Bezugszeichen der Ausführungsbeispiele der Figuren 15 und 16 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 14, verwiesen werden.

Figur 15 zeigt eine alternative Ausgestaltung eines Rückstellelements 22b. Das Rückstellelement 22b ist plattenförmig ausgebildet. Das Rückstellelement 22b ist mit einem ersten Ende drehfest mit einem Rotor gekoppelt und mit einem zweiten Ende drehfest an einer Rahmeneinheit fixiert. In Figur 15 ist das Rückstellelement 22b dreiecksförmig. Das dreiecksförmigen Rückstellelement 22b ist plattenförmig als Blattfeder ausgestaltet. Das Rückstellelement 22b weist einen Grundkörper 28b mit einem ersten Befestigungsabschnitt 102b und einem zweiten Befestigungsabschnitt 106b auf. Der Grundkörper 28b ist als gleichschenkliges Dreieck mit zwei langen Schenkeln 114b, 114b' und einer kurzen dritten Seite 116b gebildet. Das Rückstellelement 22b hat in diesem Sinne die Form eines Rahmens, da das innere des Rückstellelements 22b ein Leerraum ist. Der erste Befestigungsabschnitt 102b und der zweite Befestigungsabschnitt 106b sind an gegenüberliegenden Enden des Rückstellelements 22b angeordnet. Der erste Befestigungsabschnitt 102b ist mittig an der kurzen Seite 116b angeordnet. Der zweite Befestigungsabschnitt 106b ist an der Spitze zwischen den beiden Schenkeln 114b, 114b' angeordnet. Der erste Befestigungsabschnitt 102b und der zweite Befestigungsabschnitt 106b weisen jeweils eine Ausnehmung auf. Die Ausnehmungen sind jeweils mittig auf einer Rotationsachse des Rotors angeordnet. Die zentralen Ausnehmungen sind jeweils von runden Löchern gebildet. Die Ausnehmungen sind jeweils zur Befestigung des Rückstellelements 22b mittels Schrauben vorgesehen. Die Befestigung passiert wiederum an einer Anlagefläche am Rotor sowie einer Befestigungsfläche an der Rahmeneinheit. Der erste Befestigungsabschnitt 102b ist an dem ersten Ende des Rückstellelements 22b angeordnet. Der zweite Befestigungsabschnitt 106b ist an dem zweiten Ende des Rückstellelements 22b angeordnet.

Ferner weist das Rückstellelement 22b ein Anschlagsmittel 24b und ein weiteres Anschlagmittel 24b' auf, welche in einer ersten Anschlagsposition und einer zweiten Anschlagsposition des Rotors dazu vorgesehen sind, jeweils an einem Anschlag der Rahmeneinheit anzuliegen. Das Anschlagmittel 24b und das weitere Anschlagmittel 24b' sind dazu vorgesehen, eine oszillierende Bewegung des Rotors in Richtung der ersten Anschlagsposition und der zweiten Anschlagsposition zu begrenzen. Die Anschlagmittel 24b, 24b' sind direkt in dem Rahmen des Rückstellelements 22b integriert. Die Anschlagmittel 24b, 24b' sind jeweils in den Eckbereichen zwischen der kurzen Seite 116b und jeweils einer der Schenkel 114b, 114b' angeordnet. Das Rückstellelement 22b kann in den Eckpunkten anschlagen und die Bewegung auf diese Weise begrenzen. Das Anschlagmittel 24b und das weitere Anschlagmittel 24b' erstrecken sich an dem ersten Ende des Rückstellelements 22b, auf gegenüberliegenden Seiten am Ende des jeweiligen Schenkels 114b, 114b' in der Ecke zur kurzen Seite 116b. Das Anschlagmittel 24b und das weitere Anschlagmittel 24b' bilden jeweils eine flächige Ecke aus.

Das Rückstellelement 22b weist eine Länge von 12 mm bis 20 mm, vorzugsweise von 14 mm bis 18 mm, auf. Das Rückstellelement 22b weist über die Anschlagmittel 24b, 24b' eine Breite von 7 mm bis 15 mm, vorzugsweise von 10 mm bis 14 mm, auf. Ferner ist das Rückstellelement 22b gratfrei und weist glatte Flächen auf. Ferner sind die freien Enden der Anschlagmittel 24b, 24b' gerundet. Es sind alle Kanten im Querschnitt gerundet, wobei ein Rundungsradius von 0,1 mm bis 0,7 mm, vorzugsweise von 0,15 mm bis 0,35 mm beträgt.

Das dreiecksförmige Rückstellelement 22b besitzt eine Breite des Rahmens von 1 mm bis 5 mm, vorzugsweise von 1.5 mm bis 3 mm. Die Breite muss nicht überall gleich ausgebildet sein, beispielsweise im Bereich der Befestigungslöcher kann diese variieren.

Figur 16 zeigt eine alternative Ausgestaltung eines Rückstellelements 22c. Das Rückstellelement 22c ist plattenförmig ausgebildet. Das Rückstellelement 22c ist mit einem ersten Ende drehfest mit einem Rotor gekoppelt und mit einem zweiten Ende drehfest an einer Rahmeneinheit fixiert. In Figur 16 ist das Rückstellelement 22c O-förmig. Das O-förmige Rückstellelement 22c ist plattenförmig als Blattfeder ausgestaltet. Das Rückstellelement 22c weist einen Grundkörper 28c mit einem ersten Befestigungsabschnitt 102c und einem zweiten Befestigungsabschnitt 106c auf.

Der Grundkörper 28c weist zwei parallele kurze Seiten 118c, 118c' und zwei parallele lange Seiten 120c, 120c' auf. Das Rückstellelement 22c hat in diesem Sinne die Form eines Rahmens, da das innere des Rückstellelements 22c ein Leerraum ist. Der erste Befestigungsabschnitt 102c und der zweite Befestigungsabschnitt 106c sind an gegenüberliegenden Enden des Rückstellelements 22c angeordnet. Der erste Befestigungsabschnitt 102c ist mittig an der kurzen Seite 118c angeordnet. Der zweite Befestigungsabschnitt 106c ist mittig an der gegenüberliegenden, kurzen Seite 118c' angeordnet. Der erste Befestigungsabschnitt 102c und der zweite Befestigungsabschnitt 106c weisen jeweils eine Ausnehmung auf. Die Ausnehmungen sind jeweils mittig auf einer Rotationsachse des Rotors angeordnet. Die zentralen Ausnehmungen sind jeweils von runden Löchern gebildet. Die Ausnehmungen sind jeweils zur Befestigung des Rückstellelements 22c mittels Schrauben vorgesehen. Die Befestigung passiert wiederum an einer Anlagefläche am Rotor sowie einer Befestigungsfläche an der Rahmeneinheit. Der erste Befestigungsabschnitt 102c ist an dem ersten Ende des Rückstellelements 22c angeordnet. Der zweite Befestigungsabschnitt 106c ist an dem zweiten Ende des Rückstellelements 22c angeordnet.

Ferner weist das Rückstellelement 22c ein Anschlagsmittel 24c und ein weiteres Anschlagmittel 24c' auf, welche in einer ersten Anschlagsposition und einer zweiten Anschlagsposition des Rotors dazu vorgesehen sind, jeweils an einem Anschlag der Rahmeneinheit anzuliegen. Das Anschlagmittel 24c und das weitere Anschlagmittel 24c' sind dazu vorgesehen, eine oszillierende Bewegung des Rotors in Richtung der ersten Anschlagsposition und der zweiten Anschlagsposition zu begrenzen. Die Anschlagmittel 24c, 24c' sind direkt in dem Rahmen des Rückstellelements 22c integriert. Die Anschlagmittel 24c, 24c' sind jeweils in den Eckbereichen zwischen der kurzen Seite 118c und jeweils einer der langen Seiten 120c, 120c' angeordnet. Das Rückstellelement 22c kann in den Eckpunkten anschlagen und die Bewegung auf diese Weise begrenzen. Das Anschlagmittel 24c und das weitere Anschlagmittel 24c' erstrecken sich an dem ersten Ende des Rückstellelements 22c, auf gegenüberliegenden Seiten am Ende der jeweiligen langen Seite 120c, 120c' in der Ecke zur kurzen Seite 118c. Das Anschlagmittel 24c und das weitere Anschlagmittel 24c' bilden jeweils eine flächige Ecke aus.

Das Rückstellelement 22c weist eine Länge von 12 mm bis 20 mm, vorzugsweise von 14 mm bis 18 mm, auf. Das Rückstellelement 22c weist über die Anschlagmittel 24c, 24c' eine Breite von 7 mm bis 15 mm, vorzugsweise von 10 mm bis 14 mm, auf. Alle Übergänge des Rückstellelements 22c sind stetig und gerundet. Ferner ist das Rückstellelement 22c gratfrei und weist glatte Flächen auf. Es sind alle Kanten im Querschnitt gerundet, wobei ein Rundungsradius von 0,1 mm bis 0,7 mm, vorzugsweise von 0,15 mm bis 0,35 mm beträgt.

Das O-förmige Rückstellelement 22c besitzt eine Breite des Rahmens von 1 mm bis 5 mm, vorzugsweise von 1.5 mm bis 3 mm. Die Breite muss nicht überall gleich ausgebildet sein, beispielsweise im Bereich der Befestigungslöcher kann diese variieren.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen.

## Patentansprüche

1. Elektrisches Bürstenhandteil, insbesondere Zahnbürstenhandteil, mit zumindest einer Schnittstelle (14a) zu einer Kopplung mit einer Aufsteckbürste (10a), mit zumindest einer Rahmeneinheit (16a) und mit zumindest einer in der Rahmeneinheit (16a) aufgenommenen Antriebseinheit (18a) zu einem Antrieb der Schnittstelle (14a), die zumindest einen Rotor (20a) und zumindest ein Rückstellelement (22a; 22b) aufweist, welche mit einem ersten Ende drehfest mit dem Rotor (20a) gekoppelt ist und mit einem zweiten Ende drehfest an der Rahmeneinheit (16a) fixiert ist, wobei das zumindest eine Rückstellelement (22a; 22b) plattenförmig ausgebildet ist,
**dadurch gekennzeichnet, dass**
das zumindest eine Rückstellelement (22a; 22b) zumindest ein Anschlagmittel (24a; 24b) aufweist, welches in zumindest einer ersten Anschlagsposition des Rotors (20a) dazu vorgesehen ist, an einem Anschlag (26a) der Rahmeneinheit (16a) anzuliegen.

2. Elektrisches Bürstenhandteil nach Anspruch 1,
**dadurch gekennzeichnet, dass**
das zumindest eine Rückstellelement (22a; 22b) in einer Ruhestellung eben ausgebildet ist.

3. Elektrisches Bürstenhandteil nach einem der vorhergehenden Ansprüche, **dadurch gekennzeichnet, dass**
das zumindest eine Rückstellelement (22a; 22b) zumindest ein weiteres Anschlagmittel (24a'; 24b') aufweist, welches in zumindest einer zweiten Anschlagsposition des Rotors (20a) dazu vorgesehen ist, an einem Anschlag (26a') der Rahmeneinheit (16a) anzuliegen.

4. Elektrisches Bürstenhandteil nach Anspruch 3,
**dadurch gekennzeichnet, dass**
sich das zumindest eine Anschlagmittel (24a) und das zumindest eine weitere Anschlagmittel (24a') an dem ersten Ende des Rückstellelements (22a) auf gegenüberliegenden Seiten quer zu einem Grundkörper (28a) des Rückstellelements (22a) von dem Grundkörper (28a) des Rückstellelements (22a) weg erstrecken.

5. Elektrisches Bürstenhandteil nach Anspruch 3,
**dadurch gekennzeichnet, dass**
das zumindest eine Anschlagmittel (24a; 24b) und das zumindest eine weitere Anschlagmittel (24a'; 24b') dazu vorgesehen sind, eine Verdrehung des Rotors (20a) auf einen Rotationswinkel von 2° bis 25°, vorzugsweise von 6° bis 18° und besonders bevorzugt von 7° bis 15°, zu begrenzen.

6. Elektrisches Bürstenhandteil zumindest nach Anspruch 3,
**dadurch gekennzeichnet, dass**
das zumindest eine Anschlagmittel (24a) und das zumindest eine weitere Anschlagmittel (24a') jeweils entlang ihrer Haupterstreckungsrichtung gekrümmt ausgebildet sind.

7. Elektrisches Bürstenhandteil nach einem der vorhergehenden Ansprüche, **dadurch gekennzeichnet, dass**
das zumindest eine Rückstellelement (22a) ankerförmig ausgebildet ist, wobei das erste Ende des Rückstellelements (22a) an einem Kreuz ausgebildet ist.

8. Elektrisches Bürstenhandteil nach einem der vorhergehenden Ansprüche, **dadurch gekennzeichnet, dass**
das zumindest eine Rückstellelement (22a; 22b) zumindest teilweise aus einem Federstahl besteht.

9. Elektrisches Bürstenhandteil nach einem der vorhergehenden Ansprüche, **dadurch gekennzeichnet, dass**
ein Material des zumindest einen Rückstellelements (22a; 22b) Kohlenstoff, Silizium, Mangan, Phosphor, Schwefel und/oder Chrom umfasst.

10. Elektrisches Bürstenhandteil nach Anspruch 9,
**dadurch gekennzeichnet, dass**
ein Kohlenstoffanteil des Materials des zumindest einen Rückstellelements (22a; 22b) von 0,7 % bis 1,3 %, vorzugsweise von 0,8 % bis 1,1 %, beträgt.

11. Elektrisches Bürstenhandteil nach Anspruch 9,
**dadurch gekennzeichnet, dass**
ein Siliziumanteil des Materials des zumindest einen Rückstellelements (22a; 22b) von 0,1 % bis 0,5 %, vorzugsweise von 0,15 % bis 0,4 %, beträgt.

12. Elektrisches Bürstenhandteil nach Anspruch 9,
**dadurch gekennzeichnet, dass**
ein Mangananteil des Materials des zumindest einen Rückstellelements (22a; 22b) von 0,2 % bis 0,8 %, vorzugsweise von 0,3 % bis 0,7 %, beträgt.

13. Elektrisches Bürstenhandteil nach Anspruch 9,
**dadurch gekennzeichnet, dass**
ein Phosphoranteil des Materials des zumindest einen Rückstellelements (22a; 22b) von 0,00 % bis 0,04 %, vorzugsweise von 0,00 % bis 0,03 %, beträgt.

14. Elektrisches Bürstenhandteil nach Anspruch 9,
**dadurch gekennzeichnet, dass**
ein Schwefelanteil des Materials des zumindest einen Rückstellelements (22a; 22b) von 0,00 % bis 0,04 %, vorzugsweise von 0,00 % bis 0,03 %, beträgt.

15. Elektrisches Bürstenhandteil nach Anspruch 9,
**dadurch gekennzeichnet, dass**
ein Chromanteil des Materials des zumindest einen Rückstellelements (22a; 22b) von 0 % bis 0,5 %, vorzugsweise von 0,00 % bis 0,4 %, beträgt.

16. Elektrisches Bürstenhandteil nach einem der vorhergehenden Ansprüche, **dadurch gekennzeichnet, dass**
der zumindest eine Rotor (20a) zumindest ein einstückig ausgeführtes Käfigelement (30a) umfasst, welches zumindest einen Aufnahmebereich zu einer Aufnahme von zumindest einem Magneten (32a, 32a') aufweist.

17. Elektrisches Bürstenhandteil nach Anspruch 16,
**dadurch gekennzeichnet, dass**
das Käfigelement (30a) einen, zumindest einen Aufnahmebereich für den zumindest einen Magneten (32a, 32a') umfassenden Grundkörper (34a) und auf beiden Seiten des Grundkörpers (34a) angeordnete Achsfortsätze (36a, 38a) aufweist, die eine Rotationsachse (44a) des Rotors (20a) ausbilden.

18. Elektrisches Bürstenhandteil nach Anspruch 16,
**dadurch gekennzeichnet, dass**
der Rotor (20a) zumindest eine Abdeckung (40a, 40a') aufweist, welche zu einer Verschließung des Aufnahmebereichs des Käfigelements (30a) vorgesehen ist.

19. Elektrisches Bürstenhandteil zumindest nach Anspruch 17,
**dadurch gekennzeichnet, dass**
das Rückstellelement (22a; 22b) mit dem ersten Ende drehfest mit einem ersten Achsfortsatz (36a) des Rotors (20a) gekoppelt ist.

20. Elektrisches Bürstenhandteil zumindest nach Anspruch 19,
**dadurch gekennzeichnet, dass**
der Achsfortsatz (36a) eine parallel zu der Rotationsachse (44a) des Rotors (20a) und der Rotationsachse (44a) des Rotors (20a) zugewandte Anlagefläche (42a) zu einer Fixierung des ersten Endes des Rückstellelements (22a; 22b) aufweist.

21. Elektrisches Bürstenhandteil zumindest nach Anspruch 20,
**dadurch gekennzeichnet, dass**
ein kleinster Abstand zwischen der Anlagefläche (42a) und der Rotationsachse (44a) des Rotors (20a) zumindest annähernd 50% der geringsten Dicke (46a) des Rückstellelements (22a; 22b) entspricht.

22. Elektrisches Bürstenhandteil zumindest nach Anspruch 20,
**dadurch gekennzeichnet, dass**
die Anlagefläche (42a) in einer Vertiefung angeordnet ist, welche dazu vorgesehen ist, das Rückstellelement (22a; 22b) formschlüssig parallel zu der Anlagefläche (42a) zu sichern.

23. Elektrisches Bürstenhandteil nach einem der vorhergehenden Ansprüche, **dadurch gekennzeichnet, dass**
die Antriebseinheit (18a) zumindest ein erstes, als Schraube ausgebildetes Befestigungsmittel (48a) aufweist, welches dazu vorgesehen ist, das Rückstellelement (22a; 22b) mit einem ersten Achsfortsatz (36a) des Rotors (20a) zu verbinden.

24. Elektrisches Bürstenhandteil nach einem der vorhergehenden Ansprüche, **dadurch gekennzeichnet, dass**
die Antriebseinheit (18a) zumindest ein zweites, als Schraube ausgebildetes Befestigungsmittel (50a) aufweist, welches dazu vorgesehen ist, das Rückstellelement (22a; 22b) auf einem Fortsatz (52a) der Rahmeneinheit (16a) zu fixieren.

25. Elektrisches Bürstenhandteil nach einem der vorhergehenden Ansprüche,
**dadurch gekennzeichnet, dass**
die Antriebseinheit (18a) von einem Schwingankermotor gebildet ist.

26. Verfahren zur Herstellung des elektrischen Bürstenhandteils (12a) nach einem der vorhergehenden Ansprüche,
**dadurch gekennzeichnet, dass**
zu einer Herstellung des Rückstellelements (22a; 22b) in einem ersten Schritt ein Stanzen der Kontur und/oder der Löcher des Rückstellelements (22a; 22b) erfolgt.

27. Elektrische Zahnbürste mit einem elektrischen Bürstenhandteil (12a) nach einem der Ansprüche 1 bis 25 und mit einer Aufsteckbürste (10a).

## Claims

1. Electrical brush handpiece, in particular toothbrush handpiece, comprising at least one interface (14a) for a coupling with a plug-on brush (10a), comprising at least one frame unit (16a) and comprising at least one drive unit (18a), which is accommodated in the frame unit (16a), for driving the interface (14a), the drive unit (18a) comprising at least one rotor (20a) and at least one reset element (22a; 22b) that is coupled with the rotor (20a) with a first end in a rotationally fixed manner and is fixated on the frame unit (16a) with a second end in a rotationally fixed manner, wherein the at least one reset element (22a; 22b) is implemented so as to be plate-shaped,
**characterised in that**
the at least one reset element (22a; 22b) comprises at least one abutment element (24a; 24b), which is configured to adjoin an abutment (26a) of the frame unit (16a) in at least one first abutment position of the rotor (20a).

2. Electrical brush handpiece according to claim 1,
**characterised in that**
the at least one reset element (22a; 22b) is implemented so as to be planar in a rest position.

3. Electrical brush handpiece according to one of the preceding claims, **characterised in that**
the at least one reset element (22a; 22b) comprises at least one further abutment element (24a'; 24b'), which is configured to adjoin an abutment (26a') of the frame unit (16a) in at least one second abutment position of the rotor (20a).

4. Electrical brush handpiece according to claim 3,
**characterised in that**
the at least one abutment element (24a) and the at least one further abutment element (24a') extend on the first end of the reset element (22a), on opposed sides, transversely to a base body (28a) of the reset element (22a) and away from the base body (28a) of the reset element (22a).

5. Electrical brush handpiece according to claim 3,
**characterised in that**
the at least one abutment element (24a; 24b) and the at least one further abutment element (24a'; 24b') are configured to restrict a rotation of the rotor (20a) to a rotation angle of 2° to 25°, preferably 6° to 18° and especially preferentially 7° to 15°.

6. Electrical brush handpiece at least according to claim 3, **characterised in that**
the at least one abutment element (24a) and the at least one further abutment element (24a') are in each case implemented so as to be curved along their respective main extension direction.

7. Electrical brush handpiece according to one of the preceding claims, **characterised in that**
the at least one reset element (22a) is implemented in an anchor shape, wherein the first end of the reset element (22a) is realized on a crown.

8. Electrical brush handpiece according to one of the preceding claims, **characterised in that**
the at least one reset element (22a; 22b) is implemented at least partially of a spring steel.

9. Electrical brush handpiece according to one of the preceding claims, **characterised in that**
a material of the at least one reset element (22a; 22b) comprises carbon, silicon, manganese, phosphorus, sulfur and/or chromium.

10. Electrical brush handpiece according to claim 9,
**characterised in that**
a carbon content of the material of the at least one reset element (22a; 22b) is 0.7 % to 1.3 %, preferably 0.8 % to 1.1 %.

11. Electrical brush handpiece according to claim 9,
**characterised in that**
a silicon content of the material of the at least one reset element (22a; 22b) is 0.1 % to 0.5 %, preferably 0.15 % to 0.4 %.

12. Electrical brush handpiece according to claim 9,
**characterised in that**
a manganese content of the material of the at least one reset element (22a; 22b) is 0.2 % to 0.8 %, preferably 0.3 % to 0.7 %.

13. Electrical brush handpiece according to claim 9,
**characterised in that**
a phosphorus content of the material of the at least one reset element (22a; 22b) is 0.00 % to 0.04 %, preferably 0.00 % to 0.03 %.

14. Electrical brush handpiece according to claim 9,
**characterised in that**
a sulfur content of the material of the at least one reset element (22a; 22b) is 0.00 % to 0.04 %, preferably 0.00 % to 0.03 %.

15. Electrical brush handpiece according to claim 9,
**characterised in that**
a chromium content of the material of the at least one reset element (22a; 22b) is 0 % to 0.5 %, preferably 0.00 % to 0.4 %.

16. Electrical brush handpiece according to one of the preceding claims, **characterised in that**
the at least one rotor (20a) comprises at least one cage element (30a) that is implemented in one piece and has at least one receiving region for an accommodation of at least one magnet (32a, 32a').

17. Electrical brush handpiece according to claim 16,
**characterised in that**
the cage element (30a) has a base body (34a) comprising at least one receiving region for the at least one magnet (32a, 32a'), and has axis projections (36a, 38a), which are arranged on both sides of the base body (34a) and form a rotation axis (44a) of the rotor (20a).

18. Electrical brush handpiece according to claim 16,
**characterised in that**
the rotor (20a) comprises at least one cover (40a, 40a'), which is configured for a closure of the receiving region of the cage element (30a).

19. Electrical brush handpiece at least according to claim 17, **characterised in that**
the reset element (22a; 22b) is with its first end coupled with a first axis projection (36a) of the rotor (20a) in a rotationally fixed manner.

20. Electrical brush handpiece at least according to claim 19, **characterised in that**
the axis projection (36a) comprises an adjoining surface (42a) for a fixation of the first end of the reset element (22a; 22b), the adjoining surface (42a) being parallel to the rotation axis (44a) of the rotor (20a) and facing toward the rotation axis (44a) of the rotor (20a).

21. Electrical brush handpiece at least according to claim 20, **characterised in that**
a smallest distance between the adjoining surface (42a) and the rotation axis (44a of the rotor (20a) is at least approximately equivalent to 50 % of the smallest thickness (46a) of the reset element (22a; 22b).

22. Electrical brush handpiece at least according to claim 20, **characterised in that**
the adjoining surface (42a) is arranged in a deepening, which is configured for securing the reset element (22a; 22b) parallel to the adjoining surface (42a) in a form-fit manner.

23. Electrical brush handpiece according to one of the preceding claims, **characterised in that**
the drive unit (18a) comprises at least one first fixation element (48a), which is embodied as a screw and is configured to connect the reset element (22a; 22b) to a first axis projection (36a) of the rotor (20a).

24. Electrical brush handpiece according to one of the preceding claims, **characterised in that**
the drive unit (18a) comprises at least one second fixation element (50a), which is embodied as a screw and is configured to fix the reset element (22a; 22b) on a projection (52a) of the frame unit (16a).

25. Electrical brush handpiece according to one of the preceding claims, **characterised in that**
the drive unit (18a) is implemented by an oscillating armature motor.

26. Method for a production of the electrical brush handpiece (12a) according to one of the preceding claims,
**characterised in that**
for a production of the reset element (22a; 22b), in a first step, a punching of the contour and/or of the holes of the reset element (22a; 22b) is carried out.

27. Electrical toothbrush with an electrical brush handpiece (12a) according to one of claims 1 to 25 and with a plug-on brush (10a).

## Revendications

1. Partie poignée électrique de brosse, en particulier partie poignée électrique de brosse à dents, avec au moins une interface (14a) pour un couplage avec une brosse enfichable (10a), avec au moins une unité cadre (16a) et avec au moins une unité d'entraînement (18a) pour un entraînement de l'interface (14a), qui est reçue dans l'unité cadre et qui comprend au moins un rotor (20a) et au moins un élément de rappel (22a ; 22b), ladite unité d'entraînement (18a) étant avec une première extrémité couplée avec le rotor (20) fixement en rotation et étant avec une deuxième extrémité fixée sur l'unité cadre (16a) fixement en rotation,
l'au moins un élément de rappel (22a ; 22b) étant réalisé en forme de plaque,
**caractérisée en ce que**
l'au moins un élément de rappel (22a ; 22b) comprend au moins un moyen d'aboutement (24a ; 24b) qui est prévu, dans au moins une première position d'aboutement du rotor (20a), à jouxter une butée (26a) de l'unité cadre (16a).

2. Partie poignée électrique de brosse selon la revendication 1,
**caractérisée en ce que**
dans une position de repos l'au moins un élément de rappel (22a ; 22b) est réalisé en forme planaire.

3. Partie poignée électrique de brosse selon l'une des revendications précédentes, **caractérisée en ce que**
l'au moins un élément de rappel (22a ; 22b) comprend au moins un moyen d'aboutement de plus (24a' ; 24b'), qui est dans au moins une deuxième position d'aboutement du rotor (20a) prévu à jouxter une butée (26a') de l'unité cadre (16a).

4. Partie poignée électrique de brosse selon la revendication 3,
**caractérisée en ce que**
l'au moins un moyen d'aboutement (24a) et l'au moins un moyen d'aboutement de plus (24a') s'étendent à la première extrémité de l'élément de rappel (22a), sur des côtés opposés, transversalement à un corps de base (28a) de l'élément de rappel (22a) en s'éloignant du corps de base (28a) de l'élément de rappel (22a).

5. Partie poignée électrique de brosse selon la revendication 3,
**caractérisée en ce que**
l'au moins un élément d'aboutement (24a ; 24b) et l'au moins un moyen d'aboutement de plus (24a' ; 24b') sont prévus à limiter une rotation du rotor (20a) à un angle rotatif de 2° à 25°, préférablement de 6° à 18° et particulièrement préférentiellement de 7° à 15°.

6. Partie poignée électrique de brosse au moins selon la revendication 3, **caractérisée en ce que**
l'au moins un élément d'aboutement (24a) et l'au moins un moyen d'aboutement de plus (24a') sont réalisés à être courbés respectivement le long de sa direction d'étendue principale.

7. Partie poignée électrique de brosse selon l'une des revendications précédentes, **caractérisée en ce que**
l'au moins un élément de rappel (22a) est réalisé en forme d'une ancre, où la première extrémité de l'élément de rappel (22a) est formée sur un collet.

8. Partie poignée électrique de brosse selon l'une des revendications précédentes, **caractérisée en ce que**
l'au moins un élément de rappel (22a ; 22b) est au moins partiellement fait d'un acier à ressort.

9. Partie poignée électrique de brosse selon l'une des revendications précédentes, **caractérisée en ce qu'**
un matériau de l'au moins un élément de rappel (22a ; 22b) comprend du carbone, du silicium, du manganèse, du phosphore, du soufre et/ou du chrome.

10. Partie poignée électrique de brosse selon la revendication 9,
**caractérisée en ce qu'**
une fraction de carbone du matériau de l'au moins un élément de rappel (22a ; 22b) est 0,7 % à 1,3 %, préférablement 0,8 % à 1,1 %.

11. Partie poignée électrique de brosse selon la revendication 9,
**caractérisée en ce qu'**
une fraction de silicium du matériau de l'au moins un élément de rappel (22a ; 22b) est 0,1 % à 0,5 %, préférablement 0,15 % à 0,4 %.

12. Partie poignée électrique de brosse selon la revendication 9,
**caractérisée en ce qu'**
une fraction de manganèse du matériau de l'au moins un élément de rappel (22a ; 22b) est 0,2 % à 0,8 %, préférablement 0,3 % à 0,7 %.

13. Partie poignée électrique de brosse selon la revendication 9,
**caractérisée en ce qu'**
une fraction de phosphore du matériau de l'au moins un élément de rappel (22a ; 22b) est 0,00 % à 0,04 %, préférablement 0,00 % à 0,03 %.

14. Partie poignée électrique de brosse selon la revendication 9,
**caractérisée en ce qu'**
une fraction de soufre du matériau de l'au moins un élément de rappel (22a ; 22b) est 0,00 % à 0,04 %, préférablement 0,00 % à 0,03 %.

15. Partie poignée électrique de brosse selon la revendication 9,
**caractérisée en ce qu'**
une fraction de chrome du matériau de l'au moins un élément de rappel (22a ; 22b) est 0 % à 0,5 %, préférablement 0,00 % à 0,4 %.

16. Partie poignée électrique de brosse selon l'une des revendications précédentes, **caractérisée en ce que**
l'au moins un rotor (20a) comporte au moins un élément de cage (30a) réalisé en une pièce, qui comprend au moins une zone recevant pour recevoir au moins un aimant (32a, 32a').

17. Partie poignée électrique de brosse selon la revendication 16,
**caractérisée en ce que**
l'élément de cage (30a) comporte un corps de base (34a) comprenant au moins une zone recevant pour l'au moins un aimant (32a, 32a') et comporte prolongations d'axe (36a, 38a) qui sont disposées sur les deux côtés du corps de base (34a) formant un axe rotatif (44a) du rotor (20a).

18. Partie poignée électrique de brosse selon la revendication 16,
**caractérisée en ce que**
le rotor (20a) comporte au moins une couverture (40a, 40a') prévue pour une fermeture de la zone recevant de l'élément de cage (30a).

19. Partie poignée électrique de brosse au moins selon la revendication 17, **caractérisée en ce que**
l'élément de rappel (22a ; 22b) est couplé avec sa première extrémité fixement en rotation à une première prolongation d'axe (36a) du rotor (20a).

20. Partie poignée électrique de brosse au moins selon la revendication 19, **caractérisée en ce que**
la prolongation d'axe (36a) comprend une surface de contact (42a) parallèle à l'axe rotatif (44a) du rotor (20a) et faisant face à l'axe rotatif (44a) du rotor (20a), pour un fixement de la première extrémité de l'élément de rappel (22a ; 22b).

21. Partie poignée électrique de brosse au moins selon la revendication 20, **caractérisée en ce qu'**
un écart plus petit entre la surface de contact (42a) et l'axe rotatif (44a) du rotor (20a) est au moins approximativement équivalent à 50 % de l'épaisseur minimale (46a) de l'élément de rappel (22a ; 22b).

22. Partie poignée électrique de brosse au moins selon la revendication 20, **caractérisée en ce que**
la surface de contact (42a) est disposée dans un renfoncement qui est prévu à sécuriser l'élément de rappel (22a ; 22b) par liaison de forme en parallèle à la surface de contact (42a).

23. Partie poignée électrique de brosse selon l'une des revendications précédentes, **caractérisée en ce que**
l'unité d'entraînement (18a) comporte au moins un premier moyen de fixement (48a) qui est réalisé comme vis et est prévu à raccorder l'élément de rappel (22a ; 22b) avec une première prolongation d'axe (36a) du rotor (20a).

24. Partie poignée électrique de brosse selon l'une des revendications précédentes, **caractérisée en ce que**
l'unité d'entraînement (18a) comporte au moins un deuxième moyen de fixement (50a) qui est réalisé comme vis et est prévu à fixer l'élément de rappel (22a ; 22b) sur une projection (52a) de l'unité cadre (16a).

25. Partie poignée électrique de brosse selon l'une des revendications précédentes, **caractérisée en ce que**
l'unité d'entraînement (18a) est implémentée par un moteur à armature oscillante.

26. Procédé pour la production de la partie poignée électrique de brosse (12a) selon l'une des revendications précédentes,
**caractérisé en ce que**
pour fabriquer l'élément de rappel (22a ; 22b), dans une première étape un poinçonnage du contour et/ou des trous de l'élément de rappel (22a ; 22b) est exécuté.

27. Brosse à dents électrique avec une partie poignée de brosse électrique (12a) selon l'une des revendications 1 à 25 et avec une brosse enfichable (10a).
